# EUROPÄISCHE PATENTSCHRIFT

(11) **EP 1 263 562 B1**
(45) Veröffentlichungstag und Bekanntmachung des Hinweises auf die Patenterteilung: **02.06.2004**
(21) Anmeldenummer: 01931523.3
(22) Anmeldetag: 14.03.2001
(51) Int. Cl.: B29C 45/18, B29C 45/60, B29B 13/06

(54) **VERFAHREN ZUM SPRITZPRESSEN VON KUNSTSTOFFMISCHUNGEN**
METHOD FOR TRANSFER MOULDING POLYMER COMPOUNDS
PROCEDE DE MOULAGE PAR TRANSFERT DE MELANGES DE MATIERES PLASTIQUES

(30) Priorität: 15.03.2000 DE 10012532
(43) Veröffentlichungstag der Anmeldung: 11.12.2002
(73) Patentinhaber: G.I.A. Holding AG, 2000 Stockerau (AT)
(72) Erfinder: SCHNIEDERMEIER, Jürgen, 94405 Landau (DE); NADAY, Peter, 95500 Heinersreuth (DE); RÜTTNAUER, Rochus, Clemens, 94405 Landau (DE)
(74) Vertreter: Naefe, Jan Robert
(86) Internationale Anmeldenummer: PCT/EP2001/002874
(87) Internationale Veröffentlichungsnummer: WO 2001/068345

(56) Entgegenhaltungen:
- EP-A- 0 309 409
- EP-A- 0 342 839
- EP-A- 0 375 405
- WO-A-89/07042
- DE-A- 19 803 422
- GB-A- 996 102
- GB-A- 1 537 240

## Beschreibung

Die Erfindung betrifft ein Verfahren zum Spritzpressen von Kunststofmischungen aufweisend mindestens eine thermoplastische Polyesterkomponente und zumindest eine Modifierkomponente, insbesondere deren Recyclate, und eine Vorrichtung zum Durchführen des Verfahrens.

Aus der DE 198 03 422 A1 sind ein Verfahren und eine Vorrichtung zum Spritzpressen von faserverstärkten Kunststoffen bekannt. Das offenbarte Verfahren sieht vor, ein Kunststoffausgangsmaterial, z.B. zerkleinertes oder granuliertes Kunststoffausgangsmaterial einer Plastifizierungseinrichtung, bestehend aus einem Extrudergehäuse und einer sich im Extrudergehäuse um eine Längsachse drehenden Extruderschnecke, aufzugeben und in der Plastifizierungseinrichtung zu plastifizieren und in Richtung eines Formwerkzeuges zu fördern. Im Bereich der Plastifizierungseinrichtung wird zu der plastifizierten Kunststoffmasse Fasermaterial zugegeben und beim weiteren Transportieren in der Plastifizierungseinrichtung mit der plastifizierten Kunststoffmasse vermischt. Danach wird die plastifizierte, Fasern enthaltende Masse einer Einspritzeinrichtung zugeführt und mit der Einspritzeinrichtung durch eine Einspritzdüse in ein aus mindestens zwei Teilen gebildetes Formwerkzeug eingespritzt und anschließend im Formwerkzeug zu einem Formling gepreßt. Das Kunststoffausgangsmaterial wird über einen Schredder dem Extruder zugeführt, wobei gegebenenfalls dem Ausgangsmaterial im Schredder Additive beigemengt werden.

Die offenbarte Vorrichtung zum Durchführen des Verfahrens weist eine Plastifizierungseinrichtung mit einem Extrudergehäuse und einer im Extrudergehäuse um eine Längsachse drehbar angeordneten Extruderschnecke, eine Dosiereinrichtung für Fasermaterial, eine Einspritzeinrichtung mit einem Einspritzzylinder, einem Einspritzkolben und einer Einspritzdüse sowie einem Preßformwerkzeug mit aufeinander zu bewegbar angeordneten Formwerkzeughälften auf. weiterhin sitzt am Beginn des Extruderzylinders ein Schredder, welcher Kunststoffausgangsmaterial zum einen zerkleinert, durch Friktionswärme erhitzt und zum anderen der Extruderschnecke im Extruderzylinder zuführt.

Das Verfahren und die Vorrichtung haben sich bewährt, sind jedoch für die Verarbeitung von Kunststoffmischungen mit zumindest einer Polyesterkomponente nicht geeignet, weil insbesondere Polyester nahe an ihrem Schmelzpunkt empfindlich auf die natürliche Luftfeuchtigkeit reagieren, das heißt durch hydrolytischen Abbau die Kettenlänge der Moleküle verkürzt wird, was nachteilige Veränderungen der Werkstoffeigenschaften, z.B. verminderte Festigkeit oder geänderte Farbe nach sich zieht. Eine derartige nachteilige Beeinflussung der Werkstoffeigenschaften sind im zu produzierenden Endprodukt unerwünscht.

Andere Kunststoffarten, z.B. Polyamide sind nahe an bzw. an ihrem Schmelzpunkt oxidationsgefährdet, was ebenfalls die oben genannten Nachteile hinsichtlich der Werkstoff- bzw. Endprodukteigenschaften mit sich bringt.

Zur Vermeidung dieser Nachteile ist aus der EP 0390873 eine Vorrichtung zum Aufbereiten von thermoplastischem Kunststoffgut bekannt. Diese Vorrichtung weist einen Aufnahmebehälter auf, der oben durch eine Schleuse für einzubringendes Kunststoffgut zumindest im wesentlichen gasdicht abschließbar ist. Der Innenraum des Aufnahmebehälters steht zur Evakuierung bzw. zur Zuleitung von Schutzgas in diesen Innenraum mit zumindest einer Leitung an einer Stelle in Verbindung, die höher liegt als der höchste Füllstand im Aufnahmebehälter, wobei diese Leitung an eine Saugpumpe für gasförmiges Medium bzw. an eine Pumpe für ein Schutzgas angeschlossen ist und an die Schleuse eine weitere zur Pumpe führende Leitung angeschlossen ist. Eine derartige Vorrichtung ermöglicht es insbesondere die für Polyester notwendige Vorbehandlung, insbesondere Trocknung und Erwärmung, ohne Zersetzungsreaktionen des Polyesters zu gewährleisten. Der Aufnahmebehälter ist zweckmäßigerweise mit einem Schreddermesser, einem Rührflügel oder einem Balkenrührer versehen, welche ebenfalls gasdicht zum Behälterinnenraum hin abgedichtet sind. Außerdem ist die Zuführöffnung vom Schredder zum Extruderzylinder ebenfalls gasdicht ausgeführt.

Diese Vorrichtung hat sich bewährt, ist jedoch für die Aufbereitung von Kunststoffgemischen aufweisend mindestens eine Polyester- und zumindest eine weitere Modifierkomponente, insbesondere deren Recyclate, nicht geeignet. Insbesondere wenn die Schmelzpunkte einer oder mehrerer der Modifierkomponenten in der Nähe der im Aufnahmebehälter herrschenden Trocknungstemperatur für die Polyesterkomponente liegt, kann es zu Verbackungen bzw. Agglomeratbildung in der Aufbereitungsvorrichtung kommen, so daß deren ordnungsgemäße Funktion eingeschränkt oder ganz verhindert ist.

Aus der AT 396 900 B ist es bekannt, einem evakuierten Zerreißer einen unter Umgebungsdruck stehenden Vorzerreißer vorzuordnen.

Aus der den nächstkommenden Stand der Technik bildenden GB-A-996 102 ist ein Verfahren bekannt, bei dem eine Kunststoffmischung, zum Beispiel eine Polyestermischung, aus einem Behälter in eine Plastifizierungseinheit eingebracht wird, ein Modifierkomponente separat aufbereitet und der in der Plastifiziereinrichtung vorhandenen Kunststoffmischung zudosiert wird, wobei das Gemisch aus Kunststoffmischung und Modifier in der Plastifiziereinheit homogenisiert und als Schmelze in eine Formgebungseinheit eingespritzt wird

Ferner ist aus der EP-A-0 375 405 im Rahmen des Einspritzens von Polyestermischungen bekannt, das Polyestergemisch in einer Vorbehandlungsstation zu erwärmen und zu trocknen.

Aufgabe der Erfindung ist es, ein Verfahren zum Spritzpressen von Kunststoffmischungen ausfweisend mindestens eine Polyester- und zumindest eine Modifierkomponente, insbesondere deren Recyclate, sowie eine Vorrichtung zum Durchführen des Verfahrens anzugeben, welche eine Verarbeitung derartiger Kunststoffmischungen unter weitgehender Beibehaltung der Werkstoffeigenschaften zulassen bzw. bekannte Verbesserungen der Werkstoffeigenschaften solcher Kunststoffmischungen in vollem Umfang nutzbar machen.

Diese Aufgabe wird mit einem Verfahren mit den Merkmalen des Anspruchs 1 und einer Vorrichtung zum Durchführen des Verfahrens mit den Merkmalen des unabhängigen Anspruchs 34 gelöst. Vorteilhafte Weiterbildungen sind in den abhängigen Ansprüchen angegeben.

Im folgenden wird die Erfindung anhand der Zeichnung beispielhaft näher erläutert. Es zeigen:
- Fig. 1: schematisch eine erfindungsgemäße Spritzpreßanlage;
- Fig. 2: den Druckverlauf in der Schmelze des Hauptextruders;
- Fig. 3: schematisch eine Extruderschnecke einer erfindungsgemäßen Spritzpressanlage;
- Fig. 4: eine weitere erfindungsgemäße Ausführungsform einer Spritzpreßanlage in einer schematischen teilgeschnittenen Ansicht auf die Einspritzeinheit.

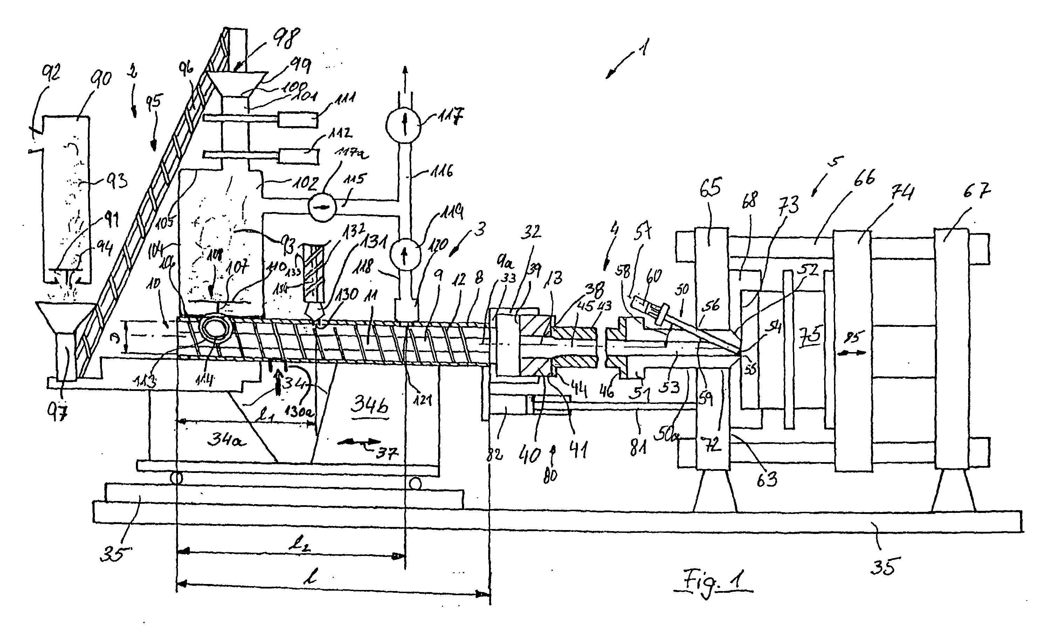

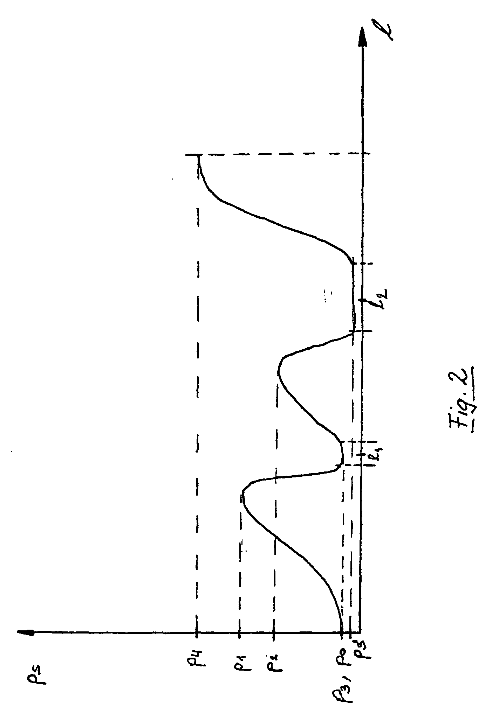

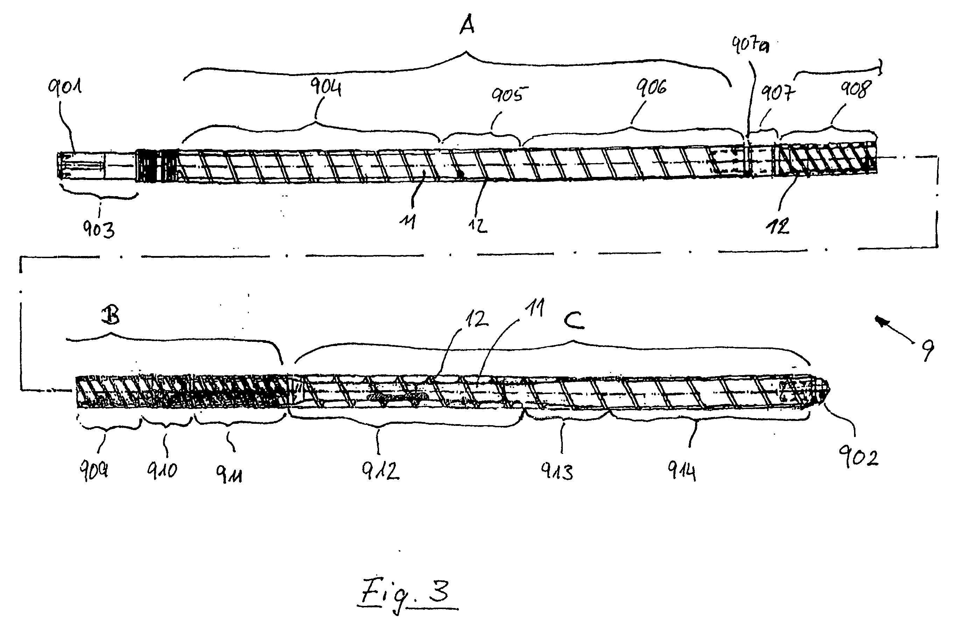

Die erfindungsgemäße Vorrichtung 1 (Fig. 1) zum Spritzpressen von Kunststoffgemischen weist hintereinander angeordnet eine Vorbehandlungsstation 2, eine Plastifizierungseinheit 3, eine Einspritzeinheit 4 und eine Formgebungseinheit 5 auf.

Die Plastifizierungseinheit 3 weist ein länglich hohlzylindrisch röhrenförmiges Extrudergehäuse 8 mit einem Innendurchmesser D, D = 50 - 220 mm, insbesondere D = 80 mm und einer darin drehbar gelagerten Extruderschnecke 9 auf. Das Extrudergehäuse 8 weist eine für Schneckenextruder spezifische Länge L/D = 35 - 55, insbesondere L/D = 44,8.

An einem Ende 10 des röhrenförmigen Extrudergehäuses 8 ist ein an sich bekannter Drehantrieb (nicht gezeigt) zum Drehen der Schnecke 9 im Gehäuse 8 angeordnet. Die Schnecke 9 weist einen im wesentlichen langgestreckten zylindrischen Schneckenkern 11 und helixförmig darum angeordnete Schneckengänge 12 auf. Von dem antriebsseitigen Ende 10 erstreckt sich die Extruderschnecke 9 durch das Extrudergehäuse 8 nach vorne bis zu einem Schneckenkopf 9a. Das Extrudergehäuseende 10, an dem der Drehantrieb angeordnet ist, stellt in Förderrichtung der Schnecke 9 gesehen ein hinteres Ende 10 dar. Der Drehsinn der Schnecke 9 ist so gewählt, daß die Schnecke 9 zu förderndes Kunststoffgut von diesem Ende weg nach vorne befördert. Das Extrudergehäuse 8 sowie die Schnecke 9 sind liegend angeordnet, d.h. die gemeinsame Längsachse 13 ist vorzugsweise horizontal orientiert.

Das Extrudergehäuse 8 steht über den Kopf 9a der Schnecke 9 ein Stück vor, wobei sich der über den Schneckenkopf 9a nach vorne hinausstehende Teil 32 des Gehäuses 8 auf Höhe des Schneckenkopfes 9a mit einer Stufe 33 erweitert. Der erweiterte Teil bildet einen Hohlzylinder 32 aus, der einen größeren Durchmesser aufweist als das um die Schnecke 9 angeordnete Extrudergehäuse 8.

An dem der Einspritzeinheit 4 zugewandten Ende der Plastifizierungseinheit 3 ist am Extrudergehäuse 8 als Rückstromsperre für die Kunststoffschmelze beispielsweise ein hydraulisch betätigter Absperrschieber 8a angeordnet, welcher den Ausgang des Extrudergehäuses schmelzedicht abschließen kann.

Die Plastifizierungseinheit 3, bestehend aus dem Extrudergehäuse 8 und der Extruderschnecke 9 sind auf einem gemeinsamen Maschinenträger bzw. Maschinenfundament 34 angeordnet, wobei das Maschinenfundament 34 zweiteilig mit einem hinteren Teil 34a, der im Bereich der Vorbehandlungsstation 2 angeordnet ist und einem vorderen Teil 34b, der im vorderen Bereich des Extruderzylinders 8 angeordnet ist, ausgebildet sein kann. Selbstversständlich kann das Maschinenfundament auch einteilig ausgebildet sein. Das Maschinenfundament 34 ist in Längsrichtung 37 des Extrudergehäuses 8 bzw. der Schnecke 9 bzw. in Förderrichtung der Schnecke 9 verschieblich auf einer Bodenplatte 35 gelagert. Die Vorbehandlungsstation 2 ist separat auf dem Boden oder auf der Bodenplatte 35 aufgestellt und befestigt.

Der Hohlzylinder 32 kann einstückig am Extrudergehäuse 8 angeformt sein, er kann jedoch auch als separates Bauteil ausgebildet sein, welches an einem nach außen vorstehenden, ringstegförmigen Flansch 33 des Extrudergehäuses 8 auf dem Schneckenkopf 9 angeordnet ist. In dem Hohlzylinder 32 ist ein Kolben 40 formschlüssig und längsverschieblich angeordnet, wobei der Kolben 40 bezüglich der Längsachse 13 etwa eine Länge aufweist, die der Länge des vom Extrudergehäuse 8 vorstehenden Hohlzylinders 32 entspricht. Der Kolben 40 weist eine der Extruderschnecke 9 zugewandte Kolbenstirnfläche 39, einen von der Extruderschnecke 9 weg weisenden Kolbenboden 38 und eine Kolbenmantelwandung 41 auf. In den Kolben 40 ist ein axial zentraler Durchlaß 42 eingebracht, der sich von der Kolbenstirnfläche 39 durch den Kolben 40 zum Kolbenboden 38 erstreckt. Der Durchlaß 42 weist eine Weite auf, die vorzugsweise geringer ist als die innere Weite des Extrudergehäuses 8 bzw. des Durchmessers der Extruderschnecke 9. Der Hohlzylinder 32 und der Kolben 40 bilden einen Einspritzzylinder 37a.

Am Kolbenboden 38 ist ein zylindrischer Einlaufstutzen 43 mit einem ringstegförmigen Flansch 44 axial fluchtend zum Kolben 40 angeordnet. Der Einlaufstutzen 43 weist einen Durchmesser auf, der geringer ist als der Durchmesser des Kolbens 40, wobei der Ringstegflansch 44 einen äußeren Durchmesser aufweisen kann, der dem des Kolbens 40 entspricht. Axial fluchtend zum Durchlaß 42 des Kolbens 40 ist in dem Einlaufstutzen 43 ein zentral axial fluchtender Durchlaß 45 eingebracht, so daß der Einlaufstutzen 43 als Hohlzylinder ausgebildet ist. Der Durchlaß 45 kann eine Weite aufweisen, die der des Durchlasses 42 entspricht. Vorzugsweise verengt sich der Durchlaß 45 im Bereich des Ringstegflansches 44 von einem Durchmesser bzw. einer Weite, die der des Durchlasses 42 entspricht, auf ein etwas geringeres Maß. An der dem Ringstegflansch 44 axial gegenüberliegenden Seite des Einlaufstutzens 43 weist der Einlaufstutzen 43 einen weiteren Ringstegflansch 46, der nach außen vorsteht, auf.

An dem Ringstegflansch 46 anschließend ist eine Einspritzdüse 50 mit einem an dem Ringstegflansch 46 axial anliegenden Ringstegflansch 51 angeordnet. Die Einspritzdüse 50 erstreckt sich von dem Ringstegflansch 51 in axialer Richtung und in Förderrichtung nach vorne und ist ein im wesentlichen zylindrischer Körper, der einen Außendurchmesser aufweist, der dem des Einlaufstutzens 43 entspricht.

An dem dem Einlaufstutzen 43 bzw. dem Ringstegflansch 53 gegenüberliegenden Ende 52 verjüngt sich die Einspritzdüse 50. Die Einspritzdüse 50 weist einen axialen zentralen Durchlaß 53 auf, welcher im Bereich des Ringstegflansches 51 dem Durchmesser des Durchlasses 45 entspricht. Im Bereich des Endes 52 der Einspritzdüse 50 verengt sich der Durchlaß 53 entsprechend der Verjüngung der Einspritzdüse am Ende 52 zu einer Einspritzdüsenmündung 54, deren Durchmesser ein Drittel bis die Hälfte des Durchmessers bzw. der Weite des Durchlasses 53 aufweist.

Die Mündung 54 der Einspritzdüse 50 kann mit der Vorderkante 55 der Düse 50 bzw. der Mündung 54 abschließend mit einer länglich zylindrischen Nadel 56 verschlossen werden. Die Nadel 56 ist schräg zur Längsachse 13 und der Einspritzdüse 50 angeordnet, wobei ihre Längsachse 57 mit der Längsachse 13 einen gegen die Förderrichtung geöffneten spitzen Winkel 58 einschließt. Die Nadel 56 ist in einem Nadelkanal 59 in der Zylinderwandung 50a der Düse 50 axial verschieblich geführt, wobei der Nadelkanal 59 eine sich von der Mündung 54 schräg zur Längsachse 13 entgegen der Förderrichtung nach außen erstreckende Bohrung 59 ist. Der Nadelkanal 59 und die Mündung 54 weisen einen identischen Innendurchmesser auf. Außerhalb der Zylinderwandung 50a der Einspritzdüse 50 ist ein z.B. hydraulischer Nadelantrieb 60 an der Zylinderwandung 50a angeordnet, welcher die Nadel 56 entlang ihrer Längsachse 57 verschieben kann.

Das Extrudergehäuse 8 sowie die Einspritzeinheit 4 sind von außen in an sich bekannter Weise elektrisch beheizt.

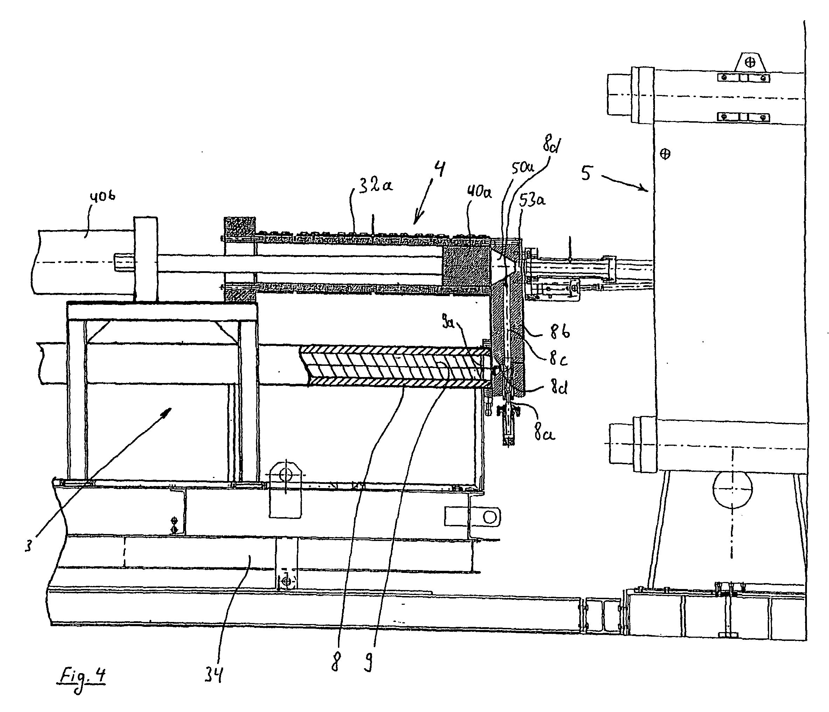

Bei einer weiteren Ausführungsform der Erfindung (Fig. 4) sind die Plastifizierungseinheit 3 und die Einspritzeinheit 4 nicht hintereinander, sondern parallel nebeneinander und insbesondere übereinander angeordnet. Bei einer derartigen Ausführungsform ist im Bereich des Schneckenkopfes 9a und der Einspritzdüse 50a der Einspritzeinheit 4 eine Verbindungseinheit 8b bzw. ein Verbindungsstück 8b angeordnet, welches die vorderseitig auf gleicher Höhe abschließende Plastifizierungseinheit 3 und Einspritzeinheit 4 miteinander verbindet. Die Verbindungseinheit 8b weist eine Durchgangsbohrung 8c auf, welche vom Bereich des Schneckenkopfes 9a des Gehäuses 9 in die Einspritzdüse 50a der Einspritzeinheit 4 mündet. Im Bereich des Schneckenkopfes 9a weist die Verbindungseinheit 8b einen Übergangskonus 8d auf, welcher sich verjüngend in die Durchgangsbohrung 8c mündet. Die Einspritzeinheit 4 besitzt ein zylindrisches Gehäuse 32a auf, in dem ein Einspritzkolben 40a verschieblich gelagert ist. Der Kolben 40 kann mit einer insbesondere hydraulischen Kolbenzylindereinheit 40b im Zylinder 32a hin und her bewegt und insbesondere auf die Einspritzdüse 50a zu bewegt werden. Bei einer derartigen Ausführungsform muss die Extrudereinheit nicht verfahrbar sein, da die Schnecke nicht in einen vor ihr liegenden Hohlraum fördert und zum Füllen desselben die Plastifizierungseinheit 3 nicht zurückfahren muss.
In Förderrichtung vor der Einspritzeinheit 4 ist die Formgebungseinheit 5 angeordnet. Die Formgebungseinheit 5 ist z.B. als sogenannte Dreiplattenmaschine ausgebildet und weist einen Formenrahmen 64 mit zwei aufrecht stehenden quadratisch plattenförmigen Querhäuptern 65, 67 auf, die sich mit Flachseiten 63 gegenüberliegend mit vier je in den Eckbereichen angeordneten zylindrischen Holmen oder Säulen 66 verbunden sind. Die plattenförmigen Querhäupter 65, 67 sind mit ihren Plattenebenen senkrecht zur Längsachse 13 orientiert. Die Säulen 66 sind parallel beabstandet zur Längsachse 13 angeordnet.

Das der Einspritzeinheit 4 zugewandte Querhaupt 65 dient als feststehende Formentischplatte 65, an deren Flachseite 63 ein Formwerkzeug 68 angeordnet ist. Die Formtischplatte 65 und das Formwerkzeug 68 weisen entlang der Längsachse 13 eine axiale zentrale Aussparung 72 auf, die der äußeren Form der Mündung 54 und der Einspritzdüse 50 soweit angepaßt ist, daß die Einspritzdüse 50 senkrecht zur Plattenebene in der Formtischplatte 65 und dem Formwerkzeug 68 eingesteckt ruht, wobei die Vorderkante 55 der Einspritzdüse 50 bzw. die Mündung 54 mit der zu einem Formteil weisenden Formwerkzeugplatten-Innenfläche 73 bündig abschließt.

Zwischen den Querhäuptern 65, 67 ist ein beweglicher Formentisch 74 mit einem dem Formwerkzeug 68 zugewandten korrespondierenden Formenwerkzeug 75 angeordnet. Auf seiner dem Formwerkzeug 75 abgewandten Seite 76 ist der Formentisch 74 mit dem in Förderrichtung vorderen Querhaupt 67 über einen hydraulischen Antrieb (nicht gezeigt) verbunden.

Das Formwerkzeug 75 kann mit dem beweglichen Formentisch 74 auf das gegenüberliegende korrespondierende Formwerkzeug 68 zu und von ihm weg bewegt werden. Die gesamte Formeneinheit 5 bzw. Formenrahmen 64 ist mit der Bodenplatte bzw. dem Gebäudefundament 35 fest verbunden, so daß auch die Einspritzeinheit 4 mit Kolben 40, dem Einlaufstutzen 43 sowie der Einspritzdüse 50 ortsfest angeordnet ist. Die Einspritzeinheit 4 kann neben dem Querhaupt 65 auch in der Formtischplatte 74 auch an weiteren Teilen des Rahmens 64 der Formgebungseinheit 5 befestigt sein.

Außerdem kann die Formgebungseinheit 5 auch als sogenannte Zweiplattenmaschine ausgebildet sein, bei der der Formentisch 74 die Funktion des Querhauptes 67 mit übernimmt und z.B. mittels Hydraulikzylindern (nicht gezeigt) gegenüber dem Querhaupt 65 verschiebbar antreibbar ist.

Zwischen dem die Einspritzeinheit 4 aufweisenden Querhaupt 65 und der beweglichen Plastifizierungseinheit 3 ist ein hydraulischer Antrieb 80 angeordnet, der es ermöglicht, die bewegliche Plastifizierungseinheit 3 auf das Querhaupt 65 zu zubewegen. Diese hydraulische Bewegungseinrichtung 80 ist üblicherweise eine Kolbenzylinderanordnung, wobei eine Kolbenstange 81 an dem Querhaupt 65 bzw. dem Rahmen 64 und der Zylinder 82 am Extrudergehäuse 8 angreift.

Durch die linear aufeinanderfolgende Anordnung der Plastifizierungseinheit 3, der Einspritzeinheit 4 und der Formgebungseinheit 5 gelangt die erschmolzene Kunststoffmasse ohne wesentliche Umlenkungen direkt in das Formwerkzeug 75, wodurch die Scherungsbelastung auf die Kunststoffmasse, welche eine nachteilige Veränderung der Molekülstruktur im Kunststoff nach sich ziehen würde, minimiert ist.

Die Vorbehandlungsstation 2 ist am antriebsseitigen Ende 10 des Extrudergehäuses 8 angeordnet und weist einen ersten Vorbehandlungsbehälter 90, z. B. einen Vortrockner 90 mit einem z.B. aus einem um eine vertikale Achse drehbaren Rührbalken 91 oder einem Schreddermesser bestehenden Rührwerk auf. Der Vorbehandlungsbehälter 90 steht im wesentlichen unter Umgebungsdruck. Über eine Zuführöffnung 92 wird das zu verarbeitende Kunststoffgut 93 dem ersten Vorbehandlungsbehälter 90 zugegeben. An den ersten Vorbehandlungsbehälter 90 kann gegebenenfalls eine Einrichtung zum Absaugen von Stäuben mit einem Staubfangbehälter angeschlos-An sein. An den ersten Vorbehandlungsbehälter 90 schließt sich eine Schrägfördereinrichtung 95 an, welche im wesentlichen aus einer Schrägförderschnecke 96, einer in Förderrichtung unteren Zuführeinrichtung 97 und einer in Förderrichtung oberen Übergabeeinrichtung 98 besteht. Das im Vorbehandlungsbehälter 90 vorgetrocknete Kunststoffgut 93 gelangt, z.B. über eine Schüttöffnung 94 im Boden des Vorbehandlungsbehälters 90 oder eine Feststoffaustragschnecke oder dergleichen in die Zuführeinrichtung 97, von wo es mittels der Schrägförderschnecke 96 auf ein gegenüber der Zuführeinrichtung 97 erhöhtes Niveau verbringbar ist und auf diesem erhöhten Niveau der Übergabeeinrichtung 98 zugeführt wird.

Die Übereingabeinrichtung 98 weist einen Einfülltrichter 99 auf, dessen im Durchmesser kleineres Ende 100 in einen beispielsweise rohrförmigen vertikal verlaufenden Übergabekanal 101 mündet. Der Übergabekanal 101 mündet mit seinem dem Trichter 99 abgewandten Ende in einen Behälter 102, welcher als zweiter Vorbehandlungsbehälter, insbesondere zur weitergehenden Trocknung des zugeführten Kunststoffguts 93 dient. Der Behälter 102 ist im wesentlichen tonnenförmig und gasdicht mit einer Behälterwandung 104, einer Behälterdeckenwandung 105 und einem Behälterboden 106 ausgestaltet. Im Bereich des Behälterbodens 106 ist in im wesentlichen bekannter Art und Weise ein um eine vertikale Achse 107 drehbares Zerreiß- und/oder Rührwerk angeordnet, welches aus einem Rührbalken bzw. einem Zerreißermesser 110 ausgebildet ist, welcher horizontal, das heißt parallel zur Bodenwandung 106 des Behälters angeordnet ist und über einen außerhalb des Behälters 102 liegenden Antrieb (nicht gezeigt) um die vertikale Achse 107 antreibbar ist.

Der Übergabekanal 101 mündet im Bereich der Behälterdeckenwandung 105 in den Behälter 102, wobei der Übergabekanal 101 mit einem ersten Schieber 111 und einem zweiten Schieber 112 ausgerüstet ist, welcher in Fallrichtung des zuzuführenden Kunststoffguts 93 hintereinander beabstandet angeordnet sind. Der erste Schieber 111 und der zweite Schieber 112 sind als gasdichte, insbesondere gasdruckdichte Abdichtungsschieber, ausgebildet, welche getrennt voneinander betätigbar sind, so daß eine Zuführschleuse für das zuzuführende Kunststoffgut 93 in den Behälter 102 ausgebildet ist.

Im Bereich der Behälterwandung 104 ist vorzugsweise in der Nähe der Deckenwandung 105 eine Entgasungsleitung 115 gasdicht, insbesondere gasdruckdicht, angeschlossen. Die Entgasungsleitung 115 ist eine erste Hochvakuumpumpe 117a, z.B. eine Roots-Pumpe, angeordnet, welche über eine Saugleitung 116 mit einer Vakuumpumpe 117, z. B. einer Wasserringpumpe, in Verbindung steht, so daß das Innere des Behälters 102 evakuiert werden kann. Außerdem zweigt von der Entgasungsleitung 115 eine weitere Saugleitung 118 ab, in welcher eine zweite Hochvakuumpumpe 119, z. B. eine Roots-Pumpe, angeordnet ist. Die Saugleitung 118 mündet anderendig in eine Entgasungsanschlußeinrichtung 120, z.B. einen Anschlußflansch, welche über eine Öffnung 121 im Extruderzylinder 8 mit dem Extruderzylinderinnenraum in Verbindung steht. Zwischen der zweiten Hochvakuumpumpe 119 und der Entgasungsanschlußeinrichtung 120 kann gegebenenfalls noch ein Abscheidebehälter (nicht gezeigt) angeordnet sein. Als geeignete Anordnungsstelle für die Entgasungsanschlußeinrichtung 120 hat sich z.B. eine Position von L2 = 24*D gemessen vom antriebsseitigen Ende 10 des Extrudergehäusezylinders bewährt.

In der Draufsicht ist der Behälter 102 seitlich neben dem Extrudergehäuse 8 angeordnet. In der Nähe der Bodenwandung 106 ist in der Behälterwandung 104 eine senkrecht zur Längsachse 107 orientierte, tangentiale zylinderabschnittsförmige Öffnung 113 angeordnet, deren Zylinderradius dem Zylinderradius des Extrudergehäuses 8 entspricht. In dem Extrudergehäuse 8 ist im Bereich der Öffnung 113 des Behälters 102 eine zu dieser Öffnung korrespondierende, senkrecht zur Längsachse 107 orientierte zylinderabschnittsförmige Öffnung 114 angeordnet, deren Zylinderradius dem Zylinderradius der Behälterwandung 104 des Behälters 102 entspricht. Der Behälter 102 ist mit der Öffnung 113 an die Öffnung 114 des Extrudergehäuses 8 angesetzt, wobei die die Öffnungen 113, 114 begrenzenden Ränder aufeinander liegen. Hierdurch ist die Extruderschnecke 9 im Bereich der Öffnungen 113, 114 tangential und mit einer Teilbreite in den Innenraum des Behälters 102 hineinragend angeordnet. Der Anschlußbereich des Behälters 102 am Extrudergehäuse 8 ist gasdicht, insbesondere gasdruckdicht, ausgeführt.

Zwischen den Öffnungen 113, 114 und der Öffnung 121 für die Entgasungsanschlußeinrichtung 120 ist vorzugsweise in einem Abstand von L1 = 19*D vom antriebsseitigen Ende 10 des Extrudergehäuses eine weitere Öffnung 130 angeordnet, welche das Extruderzylindergehäuse 8 durchdringt. An dieser Öffnung 130 sitzt eine Anschlußeinrichtung 131, welche an ihrem freien Ende mit einem zweiten Extruder 132, welcher als Dosierextruder ausgebildet ist, in Verbindung steht. Der zweite Extruder 132 dient zur Zudosierung mindestens einer Modifierkomponente, welche als Schmelze vorzugsweise in einem rechten Winkel der Kunststoffmasse, insbesondere Polyesterkunststoffmasse, im Extrudergehäuse 8 zugeführt wird.

Die Anordnung des zweiten Extruders 132 am Extrudergehäuse 8 ist nicht auf den Abstand von L1 = 19*D beschränkt. Wesentlich ist, daß die als Schmelze zugeführte Modifiermasse in einem Bereich des Hauptextruders, bestehend aus dem Extrudergehäuse 8 und der Extruderschnecke 9, zugeführt wird, in dem die Polyesterkomponente bzw. das Polyestergemisch im Hauptextruder 8, 9 als Schmelze vorliegt. Als zweckmäßig hat sich eine Anordnung im Abstand von 17 - 20 D vom Ende 10 entfernt erwiesen. Weiterhin ist wesentlich, daß die Zudosierung der Modifiermasse in Förderrichtung des Hauptextruders 8, 9 vor der Entgasungsanschlußeinrichtung 120 erfolgt, damit eventuelle gasförmige Reaktionsprodukte oder niedermolekulare Reaktionsprodukte in den vermengten Schmelzen über die Saugleitung 118 aus dem Extrudergehäuse 8 abgeleitet werden können. Weiterhin ist für die Anordnung des zweiten Extruders 132 wesentlich, daß die zudosierte Modifiermasse bis zum in Förderrichtung vorderen Ende des Hauptextruders 8, 9 homogen mit der Polyesterschmelze vermischt wird. Insofern ist der Bereich zur Anordnung des Dosierextruders 132 auf einen Bereich begrenzt, in dem einerseits im Hauptextruder 8, 9 bereits das Polyestermaterial bzw. -gemisch als Schmelze vorliegt und andererseits eine ausreichende Homogenisierung des Kunststoffgemischs am vorderseitigen Extruderende sichergestellt ist. Außerdem erfolgt die Zudosierung der Modifiermasse vorzugsweise in einem Bereich, in dem der Druck in der Schmelze des Hauptextruders 8, 9 stark abgesenkt ist. Eine Druckabsenkung in einem Teilbereich entlang der Förderrichtung des Hauptextruders 8, 9 ist beispielsweise dadurch gewährleistet, daß in dem in Frage stehenden Bereich der Schneckenkern 11 bereichsweise einen geringeren Durchmesser aufweist, um eine bereichsweise Druckabsenkung in der Schmelze zu erzeugen.

Auch im Anschlußbereich der Entgasungsanschlußeinrichtung 120 ist es zweckmäßig beispielsweise mittels vorgenannter Ausgestaltung des Schneckenkerns 11 den Druck in der Schmelze abzusenken, damit ein ungewolltes Austreten der Schmelze durch die Entgasungsanschlußeinrichtung 120 vermieden ist.

Der Dosierextruder 132 weist ein Dosierextrudergehäuse 133 auf, in dem eine Dosierextruderschnecke 134 drehbar gelagert ist. Im Ausführungsbeispiel gemäß Fig. 1 mündet das in Förderrichtung des Dosierextruders 132 vordere Ende des Dosierextruders 132 direkt in die Anschlußeinrichtung 131. Selbstverständlich ist es auch möglich, den Dosierextruder 132 benachbart zum Hauptextruder 8, 9 anzuordnen und die Schmelze der Modifiermasse über eine vorzugsweise beheizte Rohrleitung (nicht gezeigt) dem Hauptextruder 8, 9 zuzuführen.

Gemäß einer weiteren Ausführungsform der erfindungsgemäßen Spritzpreßanlage 1 ist zur optimierten Entgasung der Schmelze im Hauptextruder 8, 9 zumindest eine weitere Entgasungsanschlußeinrichtung (nicht gezeigt) am Extrudergehäuse 8 angeordnet, welche pneumatisch parallel zur ersten Entgasungsanschlußeinrichtung 120 angeschlossen ist.

Im Bereich der Entgasungsanschlußeinrichtung 120 kann außerdem eine Zudosiereinrichtung (nicht gezeigt) für Feststoffzusätze, beispielsweise ein Doppelschneckenstopfwerk angeordnet sein.

Die Extruderschnecke 9 (Fig. 3) erstreckt sich von einem antriebsseitigen Ende 901 bis zu einem, der Einspritzeinheit 4 zugewandten Ende 902 und besitzt linear aufeinanderfolgend vom antriebsseitigen Ende 901 aus einen Antriebskopplungsbereich 903, eine Einzugszone 904, eine Kompressionszone 905, eine erste Meteringzone 906, eine Staubuchse 907, eine Zudosierzone 908, eine Verdichtungszone 909, eine Druckzone 910, eine Mischzone 911, eine Vakuumzone 912, eine Kompressionszone 913 und eine zweite Meteringzone 914, welche in das plastifizierungseinrichtungsseitige Ende 902 übergeht. Die Einzugszone 904, die Kompressionszone 905 und die erste Meteringzone 906 bilden einen ersten Hauptabschnitt A der Extruderschnecke 9, wobei der Hauptabschnitt A etwa eine Länge von 15 bzw. 20 D, vorzugsweise etwa 17 D aufweist. Der Hauptabschnitt A hat die Aufgabe, das getrocknete und vorgewärmte Polyester zu plastifizieren. Im Bereich der Einzugszone 904 übernimmt die Schnecke 9 vorgewärmtes und getrocknetes Polyestermaterial. Die Schneckengänge 12 der Schnecke 9 weisen im Bereich der Einzugszone 904 eine Gangtiefe von 9 bis 18 mm, vorzugsweise 11 mm auf. Vorzugsweise weist der Extruderzylinder 8 im Bereich der Einzugszone 904 Nuten (nicht gezeigt) auf. Nach der Einzugszone 904 gelangt das Polyestermaterial in die Kompressionszone 905 in der die Gangtiefe reduziert ausgebildet ist, so daß eine Kompression des Polyestermaterials durch Volumenreduzierung gewährleistet ist. Durch die Kompression in der Kompressionszone 905 wird das Material einer hohen Scherung und hohem Druck ausgesetzt, so daß ein Aufschmelzvorgang eingeleitet wird. Die Schmelze bzw. das teilgeschmolzene Material wird anschließend in die erste Meteringzone 906 gedrückt, welche die Aufgabe hat, das eingezogene Polyestermaterial mengenmäßig zu dosieren, so daß ein Überschieben (d.h. eine unkontrollierte Förderung) der Schmelze ausgeschlossen ist. Innerhalb der Meteringzone 906 beträgt die Gangtiefe etwa 4 mm und eine Steigung von 0,6 - 1 D, insbesondere 0,8 D. Durch eine besonders druckfeste Ausgestaltung der Meteringzone 906 kann die geförderte Schmelzemasse pro Schneckenumdrehung konstant gehalten werden.

An die Meteringzone 906 schließt sich die Staubuchse 907 an, welche einen Durchmesser von 69 - 79, insbesondere von 75 mm hat, so daß ein Ringspalt zum Extrudergehäuse 8 gebildet wird. Der Stauring hat die Aufgabe, die Oberfläche des Massenstroms zu vergrößern, was durch den relativ dünnen Ringspalt 907a um die Staubuchse 907 gelingt. Anstelle der Staubuchse 907 kann zur Oberflächenvergrößerung der Schmelzemasse auch eine Gewindedrossel eingesetzt werden.

Die Eindosierzone 908, die Verdichtungszone 909, die Druckzone 910 und die Mischzone 911 bilden den zweiten Hauptabschnitt B der Extruderschnecke 9. Im zweiten Hauptabschnitt B ist die Schnecke 9 mehrgängig geschnitten, so daß der Schmelzemassestrom, definiert in mehreren Einzelkanälen läuft und somit entsprechend der Anzahl der Gänge in gleichgroße Teilmassenströme aufgeteilt wird. Die Eindosierzone 908 ist in der Gangtiefe vergrößert, welche 11 bis 15, vorzugsweise 12 mm beträgt, wobei die Länge der Eindosierzone 3 - 6 D, insbesondere etwa 3 D beträgt. Am Beginn der Eindosierzone 908 wird vorzugsweise im Winkel von 90° die zweite Komponente zudosiert, wobei die zweite Komponente durch die mehrgängige Ausgestaltung der Schnecke 9 bei gleichförmiger Rotation der Schnecke 9 in gleiche Teile aufgeteilt und den einzelnen Schmelzemasseströmen zugeführt wird. Nach Erfolg der Zudosierung werden die beiden Komponenten des Kunststoffgemischs anschließend in der Verdichterzone 909, in welcher sich die Gangtiefe auf 6 - 8 mm, insbesondere 7,5 mm reduziert verdichtet. Als zweckmäßige Steigung im Bereich der Verdichterzone 909 hat sich eine Steigung von z.B. 90 mm bewährt. Der Verdichtungszone 909 schließt sich die Druckzone 910 an, in welcher das Material weiter verdichtet wird und der notwendige Druck zum Überwinden des nachgeschalteten Mischers 911 aufgebaut wird. Innerhalb der Mischerzone 911 ist die Extruderschnecke 9 als sogenannter Igel-Mischer ausgebildet, welcher die Schmelzemasse homogenisiert. Neben der Ausgestaltung als Igelmischer sind selbstverständlich auch Schneckengänge oder andere bekannte Mischvorrichtungen denkbar.

Die Vakuumzone 112, die Kompressionszone 913 und die zweite Meteringzone 914 bilden den dritten Hauptabschnitt C der Extruderschnecke 9. Anschließend an den Igelmischer ist die Extruderschnecke 9 als Förderschnecke mit einer Länge von etwa 15 - 20 D, insbesondere etwa 16 D ausgeführt, welche durch eine Reduzierung der Dicke des Schneckenkerns 11 eine erhöhte Gangtiefe von 16 bis 20 mm, insbesondere 18 mm aufweist, so daß die Förderschnecke in diesem Bereich ein erhöhtes Fördervolumen pro Umdrehung besitzt, so daß durch die vom Mischer zur Verfügung gestellte Schmelzemasse lediglich zu einer Teilfüllung der Förderschneckengänge in der Vakuumzone 912 führt, so daß hierdurch der Druck in der Schmelze erheblich herabgesetzt wird. Das theoretische Transportvolumen pro Umdrehung der Förderschnecke in diesem Bereich beträgt etwa das Doppelte des tatsächlichen Massendurchsatzes. Im Bereich der Vakuumzone 912 ist die Entgasungs-Anschlußeinrichtung 120 am Extrudergehäuse 8 angeordnet. Eventuell entstehende gasförmige Reationsprodukte oder Restprodukte oder niedermolekulare Reaktionsprodukte können durch das angelegte Vakuum abgesaugt werden. Im Bereich der Vakuumzone kommt es vorteilhafterweise zu einer Nachkondensierung der eingesetzten Polyesterkomponenten bzw. der Komponenten des Polyestergemischs, so daß die durch die Scherbeanspruchung im vorangegangenen Bereich des Extruders abgebaute intrinsische Viskosität (IV) in diesem Bereich wieder aufgebaut wird, so daß am Ende der Vakuumzone bzw. am Ende 902 der Extruderschnecke der Polyesteranteil eine gegenüber dem Ausgangsmaterial nur wenig verringerte oder im günstigen Fall sogar erhöhte intrinsische Viskosität (IV) aufweist. Im Anschluß an die Vakuumzone 912 weist die Förderschnecke einen konisch in Förderrichtung ansteigenden Kerndurchmesser des Schneckenkerns 11 über. Die Gangtiefe im Bereich der Kompressionszone 913 beträgt 7 - 8 mm, vorzugsweise 7,5 mm bei einer Steigung von 80 mm. In der Kompressionszone wird die Kunststoffmassenschmelze erneut mit Druck beaufschlagt und der zweiten Meteringzone 914 zugeführt, welche derart ausgelegt ist, daß das Gesamtvolumen der Kunststoffschmelze aufgenommen werden kann und gleichzeitig der notwendige Druck zum Einspritzen der Kunststoffmassenschmelze in die Einspritzeinrichtung 4 aufgebaut wird. Gegebenenfalls kann im Anschluß an die zweite Meteringzone 914 im Bereich der Schneckenspitze 902 ein weiterer Mischer zur zusätzlichen Homogenisierung der Schmelze vorgesehen sein.

Wesentlich ist, daß für die Polyesterkomponente bzw. das Polyestergemisch die Meteringzone 906 massedurchflußbestimmend für den Polyestermassenfluß durch den Extruder 8, 9 ist und die nachfolgenden Fördervolumina pro Schneckenumdrehung auf das Mengenverhältnis der Polyesterkomponente und der zudosierten Modifier-Komponente abgestimmt ist.

Im folgenden wird das erfindungsgemäße Verfahren näher erläutert.

Als Ausgangsmaterial für die thermoplastische Polyesterkomponente bzw. das Polyestergemisch werden beispielsweise Polyalkylenterephtalate, z.B. Polyethylenterephtalat (PET, PET-A, PET-G), Polybutylenterephtalat (PBT) oder Polyalkylennaphtalate, z.B. Polyethylennaphtalat (PEN) oder PET-Fasern oder Gemische daraus in Form von Flocken in einer Größe von 0,1 - 10 cm oder in Form von Folienschnitzeln mit einer Größe von ca. 0,5 cm und/oder in Form von gemahlenen Preforms, das heißt gemahlene PET- und/oder PBT- und/oder PEN-Halbzeuge, wobei das Mahlgut eine Korngröße von ca. 0,2 - 5 cm, insbesondere 0,2 - 0,5 cm aufweisen kann, verwendet. Die thermoplastische Polyesterkomponente bzw. das Polyestergemisch kann als Ausgangsmaterial, insbesondere als Recyclat von thermoplastischen Polyestern bzw. von Polyestergemischen bis zu 3 %, vorzugsweise bis zur Gleichgewichtsfeuchte von 0,5 %, Feuchtigkeit aufweisen. Die intrinsische Viskosität (IV) gemessen in Dichlorbenzol/Phenol (50/50) nach DIN 53728/5 des verwendeten Polyesters, insbesondere PETs, liegt im Bereich von 0,5 - 1,0 dl/g und weist vorzugsweise einen Wert von 0,6 - 0,75 dl/g auf. Die vorbeschriebene thermoplastische Polyesterkomponente bzw. das Polyestergemisch wird beispielsweise als Schüttgut oder über ein Förderband dem ersten Aufbereitungsbehälter 90 zugegeben. Der erste Aufbereitungsbehälter 90 steht im wesentlichen unter Umgebungsdruck, wobei durch das Rührwerk 91 durch Friktion Wärme erzeugt wird, so daß im Innern des ersten Aufbereitungsbehälters 90 sich das Ausgangsmaterial durch die innere Reibung auf eine Temperatur von etwa 150 - 200°C erwärmt und somit vorgetrocknet wird. Der Trocknungsgrad der thermoplastischen Polyesterkomponente bzw. des Polyestergemisches beim Verlassen des ersten Aufbereitungsbehälters 90 beträgt bis zu 500 ppm Wasser, vorzugsweise 150 - 300 ppm Wasser.

In diesem Zustand wird die vorgetrocknete thermoplastische Polyesterkomponente bzw. das Polyestergemisch über die Schrägförderschnecke 96 der oberen Übergabeeinrichtung 98 zugeführt. Zur Aufrechterhaltung der Austrittstemperatur von 150 - 200°C der thermoplastischen Polyesterkomponente bzw. das Polyestergemisch ist die Schrägfördereinrichtung 95 außenseitig wärmeisoliert.

Die thermoplastische Polyesterkomponente bzw. das Polyestergemisch gelangt über den Übergabekanal und die Zuführschleuse bestehend aus den Schiebern 111, 112 in den zweiten Vorbehandlungsbehälter 102. Der zweite Vorbehandlungsbehälter 102 ist evakuiert und weist einen Innendruck von 1 - 20 mbar, vorzugsweise 1 - 10 mbar, auf, wobei durch den um die vertikale Achse 107 angetriebenen Rührbalken bwz. Zerreißermesser 108 das sich im Behälter 102 befindliche Material umgerührt bzw. aufgewirbelt wird, wodurch die mechanische Energie vom Rührbalken auf die thermoplastische Polyesterkomponente bzw. das Polyestergemisch in Form von Wärmeenergie übertragen wird, so daß eine Temperatur der thermoplastischen Polyesterkomponente bzw. des Polyestergemisches von 150 - 200°C, insbesondere 190°C, im zweiten Aufbereitungsbehälter 102 erhalten bleibt. Unter diesen Bedingungen wird die thermoplastische Polyesterkomponente bzw. das Polyestergemisch weiter bis auf einen Wert von 50 - 200 ppm Wasser, insbesondere bis auf einen Wert von 55 - 75 ppm Wasser, getrocknet. Das Vakuum im Behälter 102 wirkt unterstützend für die Trocknung. In diesem Zustand wird die thermoplastische Polyesterkomponente bzw. das Polyestergemisch von der Schnecke 9 des Hauptextruders 8, 9 aus dem Behälter 102 gefördert und unter Druckaufbau im Extruderzylinder 8 in Richtung des in Förderrichtung vorderen Extruderendes transportiert. Beim Transportieren ist die thermoplastische Polyesterkomponente bzw. das Polyestergemisch Reib- und Scherkräften sowie dem vorbeschriebenen Druckaufbau ausgesetzt, was zu einer weiteren Erwärmung der thermoplastischen Polyesterkomponente bzw. des Polyestergemisches auf eine Temperatur oberhalb des Schmelzpunktes, z. B. 250 - 290°C führt und die thermoplastische Polyesterkomponente bwz. das Polyestergemisch nach einer bestimmten Förderstrecke, insbesondere nach einer Strecke von L1 ≈ 19*D, als Schmelze vorliegt.

Als Modifier wird vorzugsweise ein Modifiergemisch bestehend aus einem Polyolefin und Verträglichmachern und/oder handelsüblichen Schlagzähmachern verwendet, welche in einer Mischeinrichtung in einem festen Verhältnis gemischt werden und in im wesentlichen bekannter Art und Weise in einem Extruder plastifiziert und homogenisiert werden, so daß am Ende dieses Extruders (das heißt im Dosierextruder 132) eine Schmelze des Modifiergemisches mit einer Temperatur von etwa 250 - 280°C vorliegt.

Im Ausgangszustand liegt das Polyolefin z.B. als Pulver oder als Granulat oder als Mahlgut mit einer Korngröße bis zu 1 cm vor, und weist einen Schmelzindex (Melt-Flow-Index MFI) von 0,5 - 35 g/10 Min. (190°C, 2,16 kg), oder 0,1 - 20 g/10 Min. (190°C, 5 kg) auf. Das Polyolefinausgangsmaterial besitzt einen Feuchtigkeitsanteil in üblichem Maße, z. B. weniger als 500 ppm Wasser, und wird weitgehend ungetrocknet dem Dosierextruder 132 zugeführt.

Das Modifiergemisch, bestehend aus Polyolefin und Verträglichmacher und/oder Schlagzähmachern, z.B. Lotryl®, Paraloid®, wird mittels des Dosierextruders 132 wahlweise über eine dazwischengeschaltete, vorzugsweise beheizte Rohrleitung über die Anschlußeinrichtung 131 dem Innern des Extruderzylinders 8 des Hauptextruders 8, 9 unter einem Druck von 40 - 200 bar zugeführt. Vor der Einmündungsöffnung 130 in den Extruderzylinder 8 weist das Modifiergemisch etwa eine Temperatur von 250 - 280°C auf und liegt als Schmelze bzw. plastifizierte Masse vor. Das Modifiergemisch wird in einem vorzugsweise festen Verhältnis der plastifizierten bzw. erschmolzenen thermoplastischen Polyesterkomponente bzw. des Polystergemisches zudosiert. Zur erleichterten Zudosierung des Modifiers ist im Bereich der Zudosieröffnung 130 der Druck in der Polyesterschmelze im Hauptextruder 8, 9 sehr stark abgesenkt. Dies wird, wie vorbeschrieben, durch eine Reduzierung des Schneckenkerndurchmessers des Schneckenkerns 11 im Bereich der Zudosieröffnung 130 erreicht.

Von der Zudosieröffnung 130 ab wird die thermoplastische Polyesterkomponente bzw. das Polyestergemisch zusammen mit dem zudosierten Modifiergemisch im Hauptextruder 8, 9 unter Druckanstieg vermischt und in Förderrichtung weiter nach vorne transportiert. Hierbei bilden die thermoplastische Polyesterkomponente bzw. das Polyestergemisch und die Modifierkomponente in einer chemischen Ankopplungsreaktion einen thermoplastischen Compound.

Nach einer bestimmten Strecke L2 - L1 erreicht die Kunststoffmischung bzw. das bereits entstandene thermoplastische Compound die Entgasungsanschlußeinrichtung 120. Über die Hochvakuumpumpe 119 wird an der Öffnung 121 im Bereich der Entgasungsanschlußeinrichtung 120 ein Vakuum erzeugt, so daß in diesem Bereich im Extruder ein Druck von 0,5 - 5 mbar, vorzugsweise weniger als 1 mbar, herrscht. Zweckmäßigerweise ist auch in diesem Bereich mittels der vorgenannten Maßnahmen der Druck in der Schmelze abgesenkt. Über die Vakuumanschlußleitung 180 wird eventuelle Restfeuchte in der Schmelze, welche mit der Zudosierung des Modifiergemisches in die Schmelze eingetragen wurde, abgeführt und/oder eventuelle Reaktionsprodukte, insbesondere gasförmige oder niedermolekulare Reaktionsprodukte, aus der Schmelze entfernt. Weiterhin wird ein eventueller Abbau der thermoplastischen Polyesterkomponente bzw. des Polyestergemisches verhindert.

Auf der restlichen Förderstrecke zwischen Entgasungseinrichtung und dem in Förderrichtung vorderen Extruderende wird die Schmelze weitergehend homogenisiert und eine vollständige chemische Reaktion der Ausgangskomponenten zum thermoplastischen Compound gewährleistet. Am Ende des Hauptextruders 8, 9 wird die Schmelze in bekannter Art und Weise einer Einspritzeinrichtung für eine Spritzpreßform zugeführt und zu einem Formteil weiterverarbeitet.

Der Druckverlauf der in dem Hauptextruder 8, 9 befindlichen Kunststoffmasse wird im folgenden anhand der Fig. 2 näher erläutert. Im Bereich der Öffnungen 113, 114, über die die thermoplastische Polyesterkomponente bzw. das Polyestergemisch aus der Vorbehandlungsstation 2 in den Hauptextruder 8, 9 gelangt, liegt ein Anfangsdruck p₀ in der Kunststoffmasse vor, welcher zunächst entlang der Extruderlänge L, vorzugsweise bis zum Schmelzen der thermoplastischen Polyesterkomponente bzw. des Polyestergemisches auf einen Druck p₁ ansteigt. Im weiteren Verlauf wird der Druck ausgehend vom Druck p₁ bis zu einem Umgebungsbereich um die Zudosieröffnung 130 steil abfallend etwa auf den Ausgangsdruck p₀ reduziert. Zwischen der Zudosieröffnung 130 und der Öffnung 121 wird der Druck erneut ansteigend auf ein Niveau p₂, welches etwa 2/3 des Druckwertes p₁ beträgt, gebracht, und im weiteren Verlauf im Umgebungsbereich um die Öffnung 121 steil abfallend auf ein Druckniveau p₃, welches gleich oder vorzugsweise kleiner ist als der Ausgangsdruck p₀, abgesenkt. Nach der Entgasung der Schmelze an der Öffnung 121 wird der Druck in der Schmelze kontinuierlich bis auf einen Ausbringdruck p₄ zum Ausbringen des Kunststoffgemisches bzw. des Kunststoffcompounds in den Hohlzylinder 32 gesteigert. Der Druck p₄ ist zweckmäßigerweise größer als der Druck p₁.

Im folgenden wird die Funktionsweise einer derartigen Vorrichtung erläutert. Im Ausgangszustand ist die Plastifizierungseinheit 3 in einer vorgeschobenen, der Einspritzeinheit 4 nächstliegenden Stellung, angeordnet, wobei die Kolbenstirnfläche 39 am Extrudergehäuse anliegt. Aus dem zweiten Behälter 102 wird die zu plastifizierende, wie vorbeschrieben vorbehandelte erste Komponente dem Hauptextruder 8, 9 zugefügt. Das Ausgangsmaterial der ersten Komponente wird durch die Fliehkraft erzeugt vom Rührbalken 108 von innen an die Behälterwandung 104 gedrückt. In der Vorbehandlungsstation 2 findet eine Vorerwärmung und Trocknung der zu plastifizierenden Polyesterkomponente statt. Mit der Schnecke 9 wird die zu plastifizierende Polyesterkomponente in das Extrudergehäuse 8 eingezogen, wobei das Extrudergehäuse 8 beheizt ist. Durch die Einwirkung von Wärme und Scherkräften wird das aus dem Behälter 102 abgezogene Gut plastifiziert. Vorzugsweise wird der Kern 11 der Schnecke 9 bis zum Dosierextruder 132 bei gleichbleibendem Schneckengesamtdurchmesser bzw. bei gleichbleibender Extrudergehäuseinnenweite dicker, so daß auf die zu plastifizierende Masse durch ein sich stetig verkleinerndes Volumen ein Druck ausgeübt wird (Kompressionsbereich), wodurch Wärme erzeugt wird und die Masse zusätzlich plastifiziert wird. Im Bereich des Dosierextruders 132 nimmt der Kerndurchmesser vorzugsweise wieder ab, so daß die Masse dekomprimiert wird (Dekompressionsbereich) und die zudosierte Modifierkomponente leichter eindosiert werden kann. Im weiteren Verlauf bis zum Schneckenkopf 9a kann durch eine Verdickung des Schneckenkerns 11 eine erneute Kompression der Masse stattfinden. Die plastifizierte Masse wird am Schneckenkopf 9a über den geöffneten Schieber 8a in den erweiterten, vorstehenden hohlyzlindrischen Teil 32 bzw. Einspritzzylinder 37, den Durchlaß 42 im Kolben 40, den Durchlaß 45 im Einlaufstutzen 43 und in den Durchlaß 53 der Einspritzdüse bis zur durch die Nadel verschlossenen Mündung gefüllt. Ist dieses Volumen mit plastifizierter Masse aufgefüllt und wird weiter mit der Schnecke 9 gefördert, wird durch das zunehmende Volumen im Hohlzylinder 32 bzw. Einspritzzylinder 37 an der plastifizierten Masse ein Druck auf den Kolben 40 ausgeübt, so daß die axial verschiebliche Plastifizierungseinheit 3 vom Kolben 40 weggedrückt wird. Entspricht das Volumen im Einspritzzylinder 37 einer gewünschten einzupritzenden Menge, wird die Plastifizierungseinheit 3 mit dem hydraulischen Antrieb 80 zwischen Plastifizierungseinheit 3 und Querhaupt 65 auf das Querhaupt 65 zu bewegt und gleichzeitig die Nadel 56 aus dem Mündungsbereich hinaus bewegt.

Selbstverständlich kann auch der Kolben 40 am Extrudergehäuse 8 und der Zylinder 32 am Einlaufstutzen 43 angeordnet sein, da die Wirkungsweise des Einspritzzylinders 37 sich hierdurch nicht ändert.

Bei einer Ausführungsform mit parallel nebeneinander und vorne abschließender Plastifizierungseinheit 3 und Einspritzeinheit 4 wird die Kunststoffmasse vom Schneckenkopf 9a her über ein Übergangskonus 8d in die Bohrung 8c der Verbindungseinheit 8b gedrückt und gelangt in den Bereich der Einspritzdüse 50a. Die in den Zylinder 32a über die Einspritzdüse 50 einströmende Kunststoffmasse verschiebt den Kolben 40a gegen die Einspritzrichtung im Zylinder 32a. Ist ausreichend Kunststoffmasse in den Zylinder 32a gelangt, wird der Absperrschieber 8a betätigt, die Schnecke 9 gestoppt und der Kolben 40a mit der hydraulischen Kolbenzylindereinheit 40a in den Zylinder 32a hinein gedrückt, so daß die Kunststoffmasse in bereits beschriebener Weise in die Formgebungseinheit 5 gelangt.

Aus der Mündung 54 der Einspritzdüse 50 fließt die plastifizierte Masse nun in die leicht geöffnete Form. Ist die gewünschte plastifizierte Masse in die Form eingespritzt, wird das Nadelventil wieder geschlossen und der bewegliche Formentisch 74 auf die feste Formtischplatte 65 zugefahren, wodurch ein Druck auf die Masse ausgeübt wird, welche sie dazu veranlaßt, in die gesamte Form zu fließen. Nachdem die Masse erstarrt ist, wird die Form geöffnet und das Formteil kann aus der Form entnommen werden.

Bei einer weiteren vorteilhaften Ausführungsform einer erfindungsgemäßen Vorrichtung (nicht gezeigt) sind zwei erfindungsgemäße Plastifizierungseinheiten 3 mit je einer Einspritzeinheit 4, bezogen auf eine Preßrichtung 85 der Formgebungseinheit 5, senkrecht an dem starren Querhaupt 65 angeordnet. Diese Ausführungsform wird bevorzugt bei besonders großen Formteilvolumen eingesetzt, wobei die Spritzdüse 50 keinen runden Querschnitt hat, sondern eine sogenannte Breitschlitzdüse ist, bei der die Breite der Mündung 54 etwa ein Drittel der Formenbreite beträgt.

Bei dem erfindungsgemäßen Verfahren bzw. der erfindungsgemäßen Vorrichtung ist von Vorteil, daß durch die Zugabe der Modifierkomponente in den Hauptextruder 8, 9 die Betriebsbereitschaft der Aufbereitungsanlage für die thermoplastische Polyesterkomponente bzw. das Polyestergemisch ungestört ist, das heißt, daß eine Materialagglomeration in der Aufbereitungsanlage, insbesondere im zweiten Vorbehandlungsbehälter wirksam vermieden ist. Außerdem ergibt eine getrennte Zudosierung der Modifierkomponente als Schmelze zur Schmelze der thermoplastischen Polyesterkomponente bzw. des Polyestergemisches eine definierte und vorbestimmbare Vermischung bzw. chemische Reaktion zu einem Kunststoffcompound im Hauptextruder, so daß die erwünschten Materialeigenschaften der Mischung bzw. des Compounds definiert und in vorbestimmtem Maße am Austragende des Extruders vorbestimmbar eingestellt bzw. erreicht werden können.

Außerdem ist durch die separate Aufbereitung des Modifiergemisches dessen Einspritzdruck bzw. dessen Einspritztemperatur variabel an die zu erstellende Kunststoffmischung anpaßbar, das heißt durch die getrennte Zudosierung kann auf einfache Art und Weise Einfluß auf wesentliche Parameter der Modifierschmelze bzw. des Modifiermaterials, wie z.B. Temperatur, Druck, Zusammensetzung Einfluß genommen werden. Dies gilt ebenso für die thermoplastische Polyesterkomponente bzw. das Polyestergemisch, welche für sich alleine vorbehandelt wird und somit Materialparameter, wie z.B. Feuchtigkeitsgrad, Temperatur, Druck auf einfache Weise separat für diese Komponente vorbestimmbar sind.

Diese getrennte Einflußmöglichkeit auf verschiedene Parameter der Ausgangsmaterialien eröffnet außerdem die Möglichkeit der Kunststoffmischung bzw. dem Kunststoffcompound unterschiedliche Werkstoffeigenschaften des Endprodukts aufzuprägen, welche durch Variation der Ausgangsparameter einstellbar sind.

Als besonders vorteilhaft hat sich herausgestellt, daß durch das erfindungsgemäße Verfahren bzw. mit der erfindungsgemäßen Vorrichtung eine Erhöhung der intrisischen Viskosität, zumindest aber keine unerwünschte Absenkung des IV-Wertes des Polyesters im Spritzpressprozess erreicht werden kann. Dieser Vorteil wird durch die linear aufeinanderfolgende Anordnung der Plastifizierungseinheit, der Einspritzeinheit und der Formgebungseinheit entlang einer gemeinsamen Längsachse in besonders ausgeprägtem Maße erreicht, weil hierdurch die Scherbeanspruchung der Polyesterkomponenten bzw. des Polyestergemisches bzw. der Gesamtkunststoffmasse reduziert wird.

Nach einer besonderen Ausführungsform der Erfindung kann an einer Dosieröffnung 130a (Fig. 1) mit Hilfe eines Dosiergerätes (Pfeil bei 130a), z.B. einem Doppelschneckenstopfwerk, ein pulverförmiger oder granulatartiger Modifikator in einer Konzentration von 0,1 bis 2 Gew.-% dosiert werden. Diese Dosierstelle befindet sich zweckmäßigerweise zwischen der Öffnung 130 und der Öffnung 114.

Dieser Modifikator hat den Zweck, das geschmolzene bzw. angeschmolzene Polyester zu stabilisieren. Besonders durch Verunreinigungen, wie z.B. PVC, kann der Polyester sich teilweise abbauen. Dies führt zu einer Verringerung der mechanischen Eigenschaften, wie E-Modul, Biegefestigkeit und Schlagzähigkeit.

Um dem entgegenzuwirken besteht die Möglichkeit, an Dosierstelle 130a sogenannte Kettenverzweiger oder Viskositätserhöher, wie z.B. Bisoxazoline, Bislactame oder Tetracarbonsäure-Dianhydride zuzuführen.

Diese Substanzen haben allesamt die Eigenschaften, mit dem Polyester in der Weise chemisch zu reagieren, daß weiterhin eine Stabilisierung und eine Erhöhung der Viskosität (damit auch der Molmasse), eine Verlängerung der Ketten und eine Verbesserung der Eigenschaften des Polyester erreicht wird, auch wenn dieser durch Verunreinigungen teilweise zersetzt war.

Ebenso lassen sich hier Hydrolysestabilisatoren, wie Diimide (Stabaxol der Firma Rheinchemie) zur etwaigen Vermeidung einer hydrolytischen Zersetzung zumischen.

Außerdem besteht die Möglichkeit, weitere Additive/Füllstoffe, wie z.B. Glasfasern, Naturfasern, Calciumcarbonat usw. in höheren Konzentrationen (bis 30 Gew.-%, vorzugsweise zwischen 2 und 20 Gew.-%) wie oben beschrieben zuzumischen.

## Patentansprüche

1. Verfahren zum Spritzpressen von Kunststoffmischungen aufweisend zumindest eine thermoplastische Polyesterkomponente und mindestens eine Modifierkomponente, insbesondere deren Recyclate, wobei
- die thermoplastische Polyesterkomponente bzw. das Polyestergemisch im Ausgangszustand in einer Vorbehandlungsstation (2) erwärmt und getrocknet wird,
- die erwärmte und getrocknete Polyesterkomponente einer Plastifizierungseinheit (3) aufgegeben und unter Druck sowie Reib- und Scherwirkung plastifiziert wird,
- zumindest eine Modifierkomponente außerhalb der Vorbehandlungsstation (2) aufbereitet wird und
- der in der Plastifizierungseinheit (3) vorhandenen plastifizierten Polyesterkomponente unter abgesenkten Druck in der plastifizierten Polyesterkomponente zudosiert wird,
- wobei das Gemisch aus thermoplastischer Polyesterkomponente und Modifier in der Plastifizierungseinheit (3) unter Druck Druckanstieg homogenisiert und als Schmelze in eine Einspritzeinheit (4) ausgetragen wird,
- wobei die Schmelze mittels der Einspritzeinheit (4) in eine ein geöffnetes Formwerkzeug (68, 75) aufweisende Formgebungseinheit (5) eingespritzt und
- anschließend durch Zusammenpressen des geöffneten Formwerkzeuges (68, 75) zu einem Formteil gepreßt wird.

2. Verfahren nach Anspruch 1,
**dadurch gekennzeichnet,**
**daß** die Modifierkomponente als Schmelze der thermoplastischen Polyesterkomponente zudosiert wird.

3. Verfahren nach Anspruch 1 und/oder 2,
**dadurch gekennzeichnet,**
**daß** die Modifierkomponente der Schmelze der thermoplastischen polyester komponente zudosiert wird.

4. Verfahren nach einem oder mehreren der Ansprüche 1 bis 3,
**dadurch gekennzeichnet,**
**daß** das Gemisch aus der thermoplastischen Polyesterkomponente und zumindest einer Modifierkomponente in der Plastifizierungseinheit (3) zur Entgasung und Trocknung des Gemisches mit einem Hochvakuum beaufschlagt wird.

5. Verfahren nach einem oder mehreren der Ansprüche 1 bis 4,
**dadurch gekennzeichnet,**
**daß** der Modifier in einem schmelzedruckabgesenkten Bereich der thermoplastischen Polyesterkomponente zudosiert wird.

6. Verfahren nach einem oder mehreren der Ansprüche 1 bis 5,
**dadurch gekennzeichnet,**
**daß** das Gemisch aus Polyester und Modifier in einem schmelzedruckabgesenkten Bereich mit dem Hochvakuum beaufschlagt wird.

7. Verfahren nach einem oder mehreren der Ansprüche 1 bis 6,
**dadurch gekennzeichnet,**
**daß** als thermoplastische Polyesterkomponente, insbesondere Polyalkylenterephtalate, z.B. Polyethylenterephthalat oder Polybutenterephatalat oder Polyalkylennaphtalate, z.B. Polyethylennaphtalat oder Gemische hieraus verwendet wird.

8. Verfahren nach einem oder mehreren der Ansprüche 1 bis 7,
**dadurch gekennzeichnet,**
**daß** als Modifier ein Gemisch aus einem Polyolefin und Verträglichmachern und/oder Schlagzähmachern, z.B. Lotryl® , Paraloid® etc. verwendet wird.

9. Verfahren nach Anspruch 8,
**dadurch gekennzeichnet,**
**daß** der Modifier mittels eines Dosierextruders (132) plastifiziert bzw. erschmolzen wird und über eine Anschlußeinrichtung (131) der in der Plastifizierungseinheit (3) vorhandenen Schmelze der thermoplastischen Polyesterkomponente bzw. dem Polyestergemisch zudosiert wird.

10. Verfahren nach Anspruch 8 und/oder 9,
**dadurch gekennzeichnet,**
**daß** der Modifier mit einer Temperatur von 250 bis 280°C der thermoplastischen Polyesterkomponente zudosiert wird.

11. Verfahren nach einem oder mehreren der Ansprüche 8 bis 10,
**dadurch gekennzeichnet,**
**daß** die Polyolefinkomponente und die Verträglichmacherkomponente des Modifiergemisches unter Umgebungsdruck und Umgebungstemperatur oder Plastifizierungstemperatur vermischt werden und als Gemisch im Dosierextruder (132) erschmolzen werden.

12. Verfahren nach einem oder mehreren der Ansprüche 8 bis 11,
**dadurch gekennzeichnet,**
**daß** ein Polyolefin mit einem Schmelzindex (MFI) von 0,5 bis 35 g/10 min. (190°C, 2,16 kg) bzw. 0,1 - 20 g/10 Min. (190°C, 5kg) verwendet wird.

13. Verfahren nach einem oder mehreren der Ansprüche 8 bis 12,
**dadurch gekennzeichnet,**
**daß** als Ausgangsmaterial ein Polyolefin verwendet wird, welches pulverförmig ist oder als Granulat bzw. Mahlgut bis zu einer Korngröße von 1 cm vorliegt.

14. Verfahren nach einem oder mehreren der Ansprüche 8 bis 13,
**dadurch gekennzeichnet,**
**daß** ein Polyolefin, insbesondere ein HDPE, verwendet wird, dessen Schmelzpunkt bei ca. 130°C liegt.

15. Verfahren nach einem oder mehreren der Ansprüche 8 bis 14,
**dadurch gekennzeichnet,**
**daß** ein Polyethylenterephthalat verwendet wird, dessen intrinsische Viskosität (IV) 0,5 - 1,0 dl/g, insbesondere 0,6 - 0,75 dl/g beträgt.

16. Verfahren nach einem oder mehreren der Ansprüche 8 bis 15,
**dadurch gekennzeichnet,**
**daß** als Ausgangsmaterial des Polyethylenterephthalats Flocken in einer Größe von 0,1 - 10 cm und/oder Folienschnitzel in einer Größe von bis zu 0,5 cm und/oder gemahlene Polyethylenterephthalathalbzeuge (Preforms) in einer Korngröße von 0,2 - 5 cm, insbesondere 0,2 - 0,5 cm und/oder PET-Fasern verwendet werden.

17. Verfahren nach einem oder mehreren der Ansprüche 8 bis 16,
**dadurch gekennzeichnet,**
**daß** ein Polyethylenterephthalatausgangsmaterial verwendet wird, welches einen Feuchtigkeitsanteil von bis zu 3 % aufweist.

18. Verfahren nach einem oder mehreren der Ansprüche 1 bis 17,
**dadurch gekennzeichnet,**
**daß** die thermoplastische Polyesterkomponente als Schüttgut oder über ein Förderband einem ersten Aufbereitungsbehälter (90) der Vorbehandlungsstation (2) zugegeben wird.

19. Verfahren nach einem oder mehreren der Ansprüche 1 bis 18,
**dadurch gekennzeichnet,**
**daß** der Aufbereitungsbehälter (90) mit Umgebungsdruck beaufschlagt wird und im Inneren des ersten Aufbereitungsbehälters (90) das Ausgangsmaterial der thermoplastischen Polyesterkomponente mittels eines Rührwerkes (91) auf eine Temperatur von etwa 150 - 200°C erwärmt und vorgetrocknet, insbesondere auf einen Feuchtigkeitsgehalt von 500 ppm Wasser, vorzugsweise 150 - 300 ppm Wasser vorgetrocknet wird.

20. Verfahren nach einem oder mehreren der Ansprüche 1 bis 19,
**dadurch gekennzeichnet,**
**daß** die vorgetrocknete thermoplastische Polyesterkomponente über eine Schrägfördereinrichtung (95) einer einem zweiten Vorbehandlungsbehälter (102) der Vorbehandlungsstation (2) vorgelagerten Übergabeeinrichtung (98) zugeführt wird und anschließend dem Behälter (102) über eine Zuführschleuse aufweisend gasdruckdichte Schieber (111, 112) dem zweiten Vorbehandlungsbehälter (102) zugeführt wird.

21. Verfahren nach einem oder mehreren der Ansprüche 1 bis 20,
**dadurch gekennzeichnet,**
**daß** der zweite Vorbehandlungsbehälter (102) mittels einer Vakuumpumpe (117) auf einen Innendruck von 1 - 20 mbar, vorzugsweise 1 bis 10 mbar evakuiert wird und die eingebrachte thermoplastische Polyesterkomponente mittels eines Rührbalkens (108) umgerührt bzw. aufgewirbelt wird, so daß eine Temperatur der thermoplastischen Polyesterkomponente von 150 - 200°C, insbesondere 190°C im zweiten Aufbereitungsbehälter (102) erreicht wird.

22. Verfahren nach einem oder mehreren der Ansprüche 1 bis 21,
**dadurch gekennzeichnet,**
**daß** die thermoplastische Polyesterkomponente im zweiten Aufbereitungsbehälter (102) auf einen Feuchtigkeitsanteil von 50 - 200 ppm Wasser, insbesondere auf einen Wert von 55 - 75 ppm Wasser, getrocknet wird.

23. Verfahren nach einem oder mehreren der Ansprüche 1 bis 22,
**dadurch gekennzeichnet,**
**daß** die thermoplastische Polyesterkomponente mit einer Temperatur von 150 - 200 °C, insbesondere 190°C und einem Feuchtigkeitsanteil von 50 - 200 ppm Wasser, insbesondere 55 - 75 ppm Wasser, einem Hauptextruder (8, 9) aufweisend einen Extruderzylinder (8) und eine Extruderschnecke (9), der Plastifizierungseinheit (3) aufgegeben wird.

24. Verfahren nach einem oder mehreren der Ansprüche 1 bis 23,
**dadurch gekennzeichnet,**
**daß** die Extruderschnecke (9) in Drehung versetzt wird und hierdurch die im Extruderzylinder (8) befindliche thermoplastische Polyesterkomponente Reib- und Scherkräften ausgesetzt wird, so daß die thermoplastische Polyesterkomponente weiter erwärmt, insbesondere bis auf eine Temperatur oberhalb des Schmelzpunktes, z.B. 250 - 290°C erwärmt wird, so daß die thermoplastische Polyesterkomponente im Extruderzylinder (8) als Schmelze vorliegt.

25. Verfahren nach einem oder mehreren der Ansprüche 1 bis 24,
**dadurch gekennzeichnet,**
**daß** die Schrägfördereinrichtung (95) beheizt wird.

26. Verfahren nach einem oder mehreren der Ansprüche 1 bis 25,
**dadurch gekennzeichnet,**
**daß** der Druck in der thermoplastischen Polyesterkomponente entlang des Hauptextruders (8, 9) von einem Ausgangsdruck p₀ an einer Aufgabestelle (113, 114) der themoplastischen Polyesterkomponente in den Hauptextruder (8, 9) stetig ansteigend auf einen Druck p₁ > p₀ gesteigert wird, anschließend vom Druck p₁ auf einen Druck p₃ ≤ p₀ im Bereich der Zudosieröffnung (130) abgesenkt wird, danach der Druck ausgehend vom Druck p₃ stetig ansteigend auf einen Druck p₂ (p₁ > p₂ > p₀) gesteigert wird, anschließend ausgehend vom Druck p₂ der Druck in der Schmelze bis zur Öffnung (121) hin auf einen Druck p₃, abgesenkt wird und im Anschluß daran bis zum Förderende des Hauptextruders (8, 9) auf einen Druck p₄ > p₁ gesteigert wird.

27. Verfahren nach einem oder mehreren der Ansprüche 1 bis 25,
**dadurch gekennzeichnet,**
**daß** zwischen einer Öffnung (130) und einer Öffnung (114) weitere Mittel zudosiert werden durch eine Öffnung (130a).

28. Verfahren nach Anspruch 27,
**dadurch gekennzeichnet,**
**daß** für das Zudosieren ein Doppelschneckenstopfwerk verwendet wird.

29. Verfahren nach Anspruch 27 und/oder 28,
**dadurch gekennzeichnet,**
**daß** ein pulverförmiger und/oder granulatartiger Modifikator, vorzugsweise in einer Konzentration von 0,1 bis 2 Gew.-%, zudosiert wird.

30. Verfahren nach Anspruch 29,
**dadurch gekennzeichnet,**
**daß** als Modifikator ein Mittel zugesetzt wird, das geschmolzene bzw. angeschmolzene Polyester stabilisiert.

31. Verfahren nach Anspruch 29,
**dadurch gekennzeichnet,**
**daß** Kettenverzweiger oder Viskositätserhöher, wie z.B. Bisoxazoline, Bislactame oder Tetracarbonsäure-Dianhydride zudosiert werden.

32. Verfahren nach einem oder mehreren der Ansprüche 26 bis 31,
**dadurch gekennzeichnet,**
**daß** Hydrolysestabilisatoren, z.B. Diimide zur Vermeidung einer hydrolytischen Zersetzung zudosiert werden.

33. Verfahren nach einem oder mehreren der Ansprüche 26 bis 32,
**dadurch gekennzeichnet,**
**daß** Füllstoffe, z.B. Glasfasern, Naturfasern, Calciumcarbonat in Konzentrationen bis 30 Gew.-%, vorzugsweise zwischen 2 bis 20 Gew.-%, zugemischt werden.

34. Vorrichtung zum Spritzpressen von Kunststoffmischungen aufweisend eine thermoplastische Polyesterkomponente und mindestens eine Modifierkomponente, insbesondere deren Recyclate, insbesondere Vorrichtung zum Durchführen des Verfahrens nach einem oder mehreren der Ansprüche 1 bis 33, aufweisend eine Plastifizierungseinheit (3), eine Einspritzeinheit (4) zum Plastifizieren und Homogenisieren der Kunststoffmischung, eine Einspritzeinheit (4) zum Einspritzen der plastifizierten Kunststoffmischung in ein Formwerkzeug (68, 75) einer Formgebungseinheit (5),
wobei der Plastifizierungseinheit (3) eine Vorbehandlungsstation (2) für eine thermoplastische Polyesterkomponente zum Trocknen und Erwärmen von Ausgangsmaterial der thermoplastischen Polyesterkomponente vorgeordnet ist und an der Plastifizierungseinheit (3) eine Zudosiereinheit (132) an einer Zudosieröffnung (130) zur Zugabe mindestens einer Modifierkomponente zur thermoplastischen Polyesterkomponente in die Plastifizierungseinheit (3) angeordnet ist, und die Plastifizierungseinheit (3) ein Schneckenextruder, aufweisend einen Extruderzylinder (8) mit einem antreiberseitigen Ende (10) und eine Extruderschnecke (9), ist und wobei im Bereich des Zudosieröffnung (130) Mittel zu Druckabsenkung insbesondere in Form einer Reduzierung des Schneckenkerndurchmessers des Schneckenkerns (11) vorgesehen sind.

35. Vorrichtung nach Anspruch 34,
**dadurch gekennzeichnet,**
**daß** der Schneckenextruder (8, 9) einen Nenndurchmesser D und eine Länge L aufweist, wobei das Verhältnis L/D ein für Schneckenextruder übliches Längen/Durchmesserverhältnis von L/D = 35 - 55, insbesondere L/D = 44,8 ist.

36. Vorrichtung nach Anspruch 34 und/oder 35,
**dadurch gekennzeichnet,**
**daß** die Vorbehandlungsstation (2) einen ersten Vorbehandlungsbehälter (90), eine Steigfördereinrichtung (95), eine Übergabeeinrichtung (98) mit einer Vakuumschleuse (111, 112) und einen zweiten Aufbereitungsbehälter (102) aufweist.

37. Vorrichtung nach Anspruch 36,
**dadurch gekennzeichnet,**
**daß** der erste Aufbereitungsbehälter (90) unter Umgebungsdruck steht und ein Rührwerk (91) oder ein Schreddermesser aufweist.

38. Vorrichtung nach Anspruch 37,
**dadurch gekennzeichnet,**
**daß** das Rührwerk (91) um eine vertikale Achse drehbar ist, so daß das sich im Behälter (90) befindende Ausgangsmaterial der thermoplastischen Polyesterkomponente erwärmbar ist.

39. Vorrichtung nach einem oder mehreren der Ansprüche 36 bis 37,
**dadurch gekennzeichnet,**
**daß** der Behälter (90) eine Austragöffnung (94) oder eine Austragschnecke für Festkörper aufweist, über die das Ausgangsmaterial der thermoplastischen Polyesterkomponente der Steigfördereinrichtung (95) zuführbar ist.

40. Vorrichtung nach einem der mehreren der Ansprüche 36 bis 39,
**dadurch gekennzeichnet,**
**daß** die Steigfördereinrichtung (95) ein Schneckenförderer (96) mit einer Förderschnecke und einem Schneckenförderzylinder ist, wobei der Schneckenförderzylinder gegebenenfalls isoliert ist.

41. Vorrichtung nach einem oder mehreren der Ansprüche 36 bis 40,
**dadurch gekennzeichnet,**
**daß** der zweite Aufbereitungsbehälter (102) tonnenförmig mit einer Behälterwandung (104) einer Deckenwandung (105) und einer Bodenwandung (106) ausgebildet ist.

42. Vorrichtung nach einem oder mehreren der Ansprüche 36 bis 41,
**dadurch gekennzeichnet,**
**daß** der zweite Aufbereitungsbehälter (102) gasdicht, insbesondere gasdruckdicht ist, wobei an dessen Deckenwand ein im wesentlichen rohrförmiger Einfüllschacht für die thermoplastische Polyesterkomponente angebunden ist, an der Behälterwandung (104) eine Vakuumleitung (115) angeschlossen ist, und im Bereich der Bodenwandung (106) ein um eine vertikale Achse (107) drehbares Rührwerk (108) angeordnet ist.

43. Vorrichtung nach Anspruch 42,
**dadurch gekennzeichnet,**
**daß** im Einfüllschacht (101) diesen im Querschnitt jeweils abdichtend gasdichte, insbesondere gasdruckdichte Vakuumschieber (111, 112) hintereinander angeordnet sind, welche eine Zuführschleuse für das dem Behälter (102) zuzuführende Material bilden.

44. Vorrichtung nach Anspruch 42 und/oder 43,
**dadurch gekennzeichnet,**
**daß** die Vakuumleitung (115) mit einer ersten Hochvakuumpumpe (117a) und einer Vakuumpumpe (117) in Verbindung steht, so daß der zweite Aufbereitungsbehälter (102) evakuierbar, insbesondere auf einen Druck von 1 bis 20, vorzugsweise 1 bis 10 mbar evakuierbar ist.

45. Vorrichtung nach Anspruch 44,
**dadurch gekennzeichnet,**
**daß** das dem Behälter (102) zugeführte Material mittels des Rührwerks (108) umrühr- bzw. aufwirbelbar und somit erwärmbar ist, so daß im Zusammenspiel mit dem im Behälter (102) herrschenden Vakuum der Wert des Feuchtigkeitsgrades des sich im Behälter (102) befindlichen Materials auf einen Wert von 50 bis 200 ppm Wasser, insbesondere 50 bis 75 ppm Wasser reduzierbar ist.

46. Vorrichtung nach einem oder mehreren der Ansprüche 34 bis 45,
**dadurch gekennzeichnet,**
**daß** der zweite Aufbereitungsbehälter (102) eine Austragöffnung (113) aufweist, welche deckungsgleich mit einer Öffnung (114) im Extruderzylinder (8) des Hauptextruders (8, 9) angeordnet ist, so daß das sich im Behälter (102) befindliche Material von der Extruderschnecke (9) in den Hauptextruder (8, 9) einziehbar ist.

47. Vorrichtung nach Anspruch 46,
**dadurch gekennzeichnet,**
**daß** der zweite Aufbereitungsbehälter (102) gasdicht, insbesondere gasdruckdicht mit dem Inneren des Extruderzylinders (8) verbunden ist.

48. Vorrichtung nach einem oder mehreren der Ansprüche 34 bis 47,
**dadurch gekennzeichnet,**
**daß** die Zudosiereinheit (132) ein Dosierextruder ist, mit welchem die Modifierkomponente erschmelzbar ist und die Schmelze gegebenenfalls über eine Rohrleitung dem Hauptextruder (8, 9) in einem Abstand L₁ = 17 - 20 D, insbesondere L₁ = 19 D vom Zuführende (10) zudosierbar ist.

49. Vorrichtung nach einem oder mehreren der Ansprüche 34 bis 48,
**dadurch gekennzeichnet,**
**daß** an der Plastifiziereinheit (3) in einem Abstand l₂ > l₁ vom Zuführende (10) im Extruderzylinder (8) eine Öffnung (121) angeordnet ist, an die eine Hochvakuumleitung (118) angeschlossen ist, welche mit einer zweiten Hochvakuumpumpe (119), z.B. einer Roots-Pumpe in Verbindung steht, so daß das Innere des Extruderzylinders (8) mit einem Druck von 0,5 - 5 mbar, insbesondere weniger als 1 mbar beaufschlagbar ist.

50. Vorrichtung nach einem oder mehreren der Ansprüche 34 bis 49,
**dadurch gekennzeichnet, daß**
die Plastifizierungseinheit (3), die Einspritzeinheit (4) und die Formgebungseinheit (5) entlang einer gemeinsamen Längsachse (13) linear aufeinanderfolgend angeordnet sind.

51. Vorrichtung nach einem oder mehreren der Ansprüche 34 bis 49,
**dadurch gekennzeichnet, daß**
die Plastifizierungseinheit und die Einspritzeinheit parallel nebeneinander, insbesondere übereinanderliegend angeordnet sind, wobei die Einspritzeinheit (4) einen Einspritzzylinder (32a) aufweist, in welchem ein Einspritzkolben (40a) verschieblich gelagert angeordnet ist, wobei der Kolben (40a) mit einer insbesondere hydraulischen Kolbenzylindereinheit (40b) in Wirkverbindung steht.

52. Vorrichtung nach einem oder mehreren der Ansprüche 34 bis 51,
**dadurch gekennzeichnet, daß**
die Extruderschnecke (9) in Förderrichtung aufeinanderfolgend einen Antriebskopplungsbereich (903), eine Einzugszone (904), eine Kompressionszone (905), eine erste Meteringzone (906), eine Staubuchse (907), eine Eindosierzone (908), eine Verdichterzone (909), eine Druckzone (910), eine Mischerzone (911), eine Vakuumzone (912), eine Kompressionszone (913) und eine zweite Meteringzone (914) aufweist.

53. Vorrichtung nach Anspruch 52,
**dadurch gekennzeichnet, daß**
die Einzugszone (904), die Kompressionszone (905) und die erste Meteringzone (906) einen ersten Hauptabschnitt (A) der Extruderschnecke (9) für die thermoplastische Polyesterkomponente bzw. das Polyestergemisch bildet, indem das Polyesterausgangsmaterial, eingezogen, verdichtet und erschmolzen wird sowie der Fördermassenstrom der Schmelze definierbar ist.

54. Vorrichtung nach Anspruch 53,
**dadurch gekennzeichnet, daß**
der Hauptabschnitt (A) eine Länge von 15 - 20 D, insbesondere etwa 17 D aufweist.

55. Vorrichtung nach einem oder mehreren der Ansprüche 52 bis 54,
**dadurch gekennzeichnet, daß**
die Extruderschnecke (9) in der Einzugszone (904) eine Gangtiefe von 9 - 18, insbesondere 11 mm aufweist und die erste Meteringzone (906) eine Gangtiefe von etwa 4 mm und eine Steigung von 0,6 bis 1 D, insbesondere 0,8 D aufweist, wobei die erste Meteringzone (906) derart ausgelegt ist, daß die durchgesetzte Schmelzenmasse pro Schneckenumdrehung konstant ist.

56. Vorrichtung nach einem oder mehreren der Ansprüche 52 bis 55,
**dadurch gekennzeichnet, daß**
der ersten Meteringzone (906) eine Staubuchse (907) oder eine Gewindedrossel zur Vergrößerung der Schmelzenmassenoberfläche nachgeordnet ist.

57. Vorrichtung nach einem oder mehreren der Ansprüche 52 bis 56,
**dadurch gekennzeichnet, daß**
die Extruderschnecke (9) im Bereich der Eindosierzone (908), der Verdichterzone (909) und der Druckzone (910) mehrgängig ausgebildet ist, wobei die Eindosierzone (908) eine Länge von 3 bis 6 D, insbesondere etwa 3 D aufweist, so daß der Massenstrom in mehrere Einzelmassenströme aufgeteilt wird, wobei die Gangtiefe in der Eindosierzone (908) etwa 11 bis 15 mm, insbesondere 12 mm beträgt.

58. Vorrichtung nach einem oder mehreren der Ansprüche 52 bis 57,
**dadurch gekennzeichnet, daß**
in der Verdichterzone (909) die Gangtiefe sich auf etwa 6 - 8 mm, insbesondere 7,5 mm reduziert.

59. Vorrichtung nach einem oder mehreren der Ansprüche 52 bis 58,
**dadurch gekennzeichnet, daß**
in der Mischerzone (911) eine Mischervorrichtung angeordnet ist, welche beispielsweise als Igelmischer ausgebildet ist.

60. Vorrichtung nach einem oder mehreren der Ansprüche 52 bis 59,
**dadurch gekennzeichnet, daß**
die Eindosierzone (908), die Verdichtungszone (909), die Druckzone (910) und die Mischerzone (911) einen zweiten Hauptabschnitt (B) der Extruderschnecke (9) bilden, indem eine zweite Kunststoffmassenkomponente der Polyesterkömponente bzw. dem Polyestergemisch zudosierbar ist und die Gesamtkunststoffmasse mischbar und homogenisierbar ist.

61. Vorrichtung nach einem oder mehreren der Ansprüche 52 bis 60,
**dadurch gekennzeichnet, daß**
die Vakuumzone (912), die Kompressionszone (913) und die zweite Meteringzone (914) einen dritten Hauptabschnitt (C) der Extruderschnecke (9) bilden, welche als Förderschnecke ausgebildet ist und ein Fördervolumen pro Schneckenumdrehung aufweist, welches größer ist als das der vorgeschalteten Extruderschneckenabschnitte (A und B) und der Hauptabschnitt (C) eine Länge von etwa 15 - 20 D, vorzugsweise etwa 16 - 17 D aufweist:

62. Vorrichtung nach Anspruch 61,
**dadurch gekennzeichnet, daß**
im Bereich der Vakuumzone (912) die Gangtiefe vergrößert, etwa auf 16 - 20 mm, insbesondere 18 mm vergrößert ausgebildet ist.

63. Vorrichtung nach einem oder mehreren der Ansprüche 52 bis 62,
**dadurch gekennzeichnet, daß**
im Bereich der Kompressionzone (913) die Gangtiefe in Förderrichtung auf etwa 7 - 8 mm, vorzugsweise 7,5 mm bei einer Steigung von 80 mm reduziert ist.

64. Vorrichtung nach einem oder mehreren der Ansprüche 34 bis 63,
**dadurch gekennzeichnet,**
**daß** zwischen der Öffnung (130) und der Öffnung (114) eine weitere Dosieröffnung (130a) vorgesehen ist.

65. Vorrichtung nach Anspruch 64,
**dadurch gekennzeichnet,**
**daß** an die Dosieröffnung (130a) ein Dosiergerät, z.B. ein Doppelschneckenstopfwerk angesetzt ist.

## Claims

1. Method for transfer moulding plastic compositions having at least one thermoplastic polyester component and at least one modifier component, particularly in the form of recycled stock, wherein
- the thermoplastic polyester component or polyester mixture in the initial condition is heated and dried in a conditioning station (2),
- the heated and dried polyester component is fed to a plastication unit (3) and plasticized under pressure and the action of friction and shear, and
- at least one modifier component is prepared outside the conditioning station (2) and
- added in metered amounts to the plasticized polyester component present in the plastication unit (3), under lowered pressure in the plasticized polyester component,
- the mixture of thermoplastic polyester component and modifier being homogenized in the plastication unit (3) under raised pressure and discharged as melt to an injection unit (4), and
- the melt being injected by the injection unit (4) into a moulding unit (5) having an opened mould (68, 75) and
- then being pressed into a moulding by pressing together the opened mould (68, 75).

2. Method according to Claim 1,
**characterized in that**
the modifier component is added as melt to the thermoplastic polyester component.

3. Method according to Claim 1 and/or Claim 2,
**characterized in that**
the modifier component is added to the melt of the thermoplastic polyester component.

4. Method according to one or more of Claims 1 to 3,
**characterized in that**
the mixture of the thermoplastic polyester component and the at least one modifier component is subjected to a high vacuum in the plastication unit (3) to degas and dry the mixture.

5. Method according to one or more of Claims 1 to 4,
**characterized in that**
the modifier is added to the thermoplastic polyester component in a lowered melt pressure zone.

6. Method according to one or more of Claims 1 to 5,
**characterized in that**
the mixture of polyester and modifier is subjected to high vacuum in a lowered melt pressure zone.

7. Method according to one or more of Claims 1 to 6,
**characterized in that**
the thermoplastic polyester component used is in particular a polyalkylene terephthalate, e.g. polyethylene terephthalate or polybutene terephthalate, or a polyalkylene naphthalate, e.g. polyethylene naphthalate, or a mixture thereof.

8. Method according to one or more of Claims 1 to 7,
**characterized in that**
the modifier used is a mixture of a polyolefin and compatibilizers and/or impact modifiers, e.g. Lotryl® , Paraloid®, etc.

9. Method according to Claim 8,
:haracterized in that
the modifier is plasticized or melted by means of a metering extruder (132) and added in metered amounts via a connecting device (131) to the melt of the thermoplastic polyester component or polyester mixture present in the plastication unit (3).

10. Method according to Claim 8 and/or Claim 9,
**characterized in that**
the modifier is added to the thermoplastic polyester component at a temperature of 250 to 280 °C.

11. Method according to one or more of Claims B to 10,
**characterized in that**
the polyolefin component and the compatibilizer component of the modifier mixture are mixed at ambient pressure and ambient. temperature or plasticizing temperature, and melted as a mixture in the metering extruder (132).

12. Method according to one or more of Claims 8 to 11,
**characterized in that**
an olefin with a melt flow index (MFI) of 0.5 to 35 g/10 min. (190°C, 2.16 kg) or 0.1 - 20 g/10 min. (190°C, 5 kg) is used.

13. Method according to one or more of Claims 8 to 12,
**characterized in that**
an olefin presented in powder form or as granules and/or ground stock with a grain size of up to 1 cm is used as initial material.

14. Method according to one or more of Claims 8 to 13,
**characterized in that**
an olefin, particularly an HDPE, with a melting point of approx. 130°C is used.

15. Method according to one or more of Claims 8 to 14,
**characterized in that**
a polyethylene terephthalate whose intrinsic viscosity (IV) is 0.5 - 1.0 dl/g, in particular 0.6 - 0.75 dl/g, is used.

16. Method according to one or more of Claims 8 to 15,
**characterized in that**
flakes in a size of 0.1 - 10 cm and/or foil shreds in a size
of up to 0.5 cm and/or ground polyethylene terephthalate intermediate shapes (preforms) in a grain size of 0.2 - 5 cm, particularly 0.2 - 0.5 cm, and/or PET fibres, are used as the initial material of the polyethylene terephthalate.

17. Method according to one or more of Claims 8 to 16,
**characterized in that**
a polyethylene terephthalate initial material which has a moisture content of up to 3% is used.

18. Method according to one or more of Claims 1 to 17,
**characterized in that**
the thermoplastic polyester component is fed as bulk material or by conveyor belt to a first preparation vessel (90) of the conditioning station (2).

19. Method according to one or more of Claims 1 to 18,
**characterized in that**
the preparation vessel (90) is at ambient pressure, and the initial material of the thermoplastic polyester component is heated to a temperature of approximately 150 - 200 °C and predried, in particular predried to a moisture content of 500 ppm of water, and preferably 150 - 300 ppm of water, by an agitator (91) inside the first preparation vessel (90).

20. Method according to one or more of Claims 1 to 19,
**characterized in that**
the predried thermoplastic polyester component is fed by an inclined conveyor (95) to a transfer device (98) ahead of a second conditioning vessel (102) of the conditioning station (2) and is then fed through gas-pressure-tight slide gates (111, 112) forming a lock to the second conditioning vessel (102).

21. Method according to one or more of Claims 1 to 20,
**characterized in that**
the second conditioning vessel (102) is evacuated by.means of a vacuum pump (117) to an internal pressure of 1 - 20 mbar, preferably 1 to 10 mbar, and the thermoplastic polyester component introduced is stirred or swirled by an agitator bar (108) so that a thermoplastic polyester component, temperature of 150 - 200 °C, in particular 190°C, is reached in the second preparation vessel (102).

22. Method according to one or more of Claims 1 to 21,
**characterized in that**
the thermoplastic polyester component is dried in the second preparation vessel (102) to a moisture content of 50 - 200 ppm of water, in particular to a value of 55 - 75 ppm of water.

23. Method according to one or more of Claims 1 to 22,
**characterized in that**
the thermoplastic polyester component is fed, at a temperature of 150 - 200 °C, in particular 190°C, and with a moisture content of 50 - 200 ppm of water, in particular 55 - 75 ppm of water, to a main extruder (8, 9) of the plastication unit (3) comprising an extruder cylinder (8) and an extruder screw (9).

24. Method according to one or more of Claims 1 to 23,
**characterized in that**
the extruder screw (9) is set in rotation and the thermoplastic polyester component in the extruder cylinder (8) is thereby subjected to friction and shear forces so that the thermoplastic polyester component is heated further, in particular up to a temperature above melting point, e.g. 250 - 290°C, so that the thermoplastic polyester component in the extruder cylinder (8) is in the form of a melt.

25. Method according to one or more of Claims 1 to 24,
**characterized in that** the inclined conveyor (95) is heated.

26. Method according to one or more of Claims 1 to 25,
**characterized in that**
the pressure in the thermoplastic polyester component is steadily raised along the main extruder (8, 9) from an initial pressure p0 at an infeed point (113, 114) of the thermoplastic polyester component into the main extruder (8, 9) to a pressure p1 > p0, and then lowered from the pressure p1 to a pressure p3 * p0 in the region of the metered-addition opening (130), after which, from the pressure p3, the pressure is steadily raised to a pressure p2 (p1 > p2 > p3); from the pressure p2 the pressure in the melt is then lowered to a pressure p3 when the opening (121) is reached, after which it is raised to a pressure p4 > p1 at the delivery end of the main extruder (8, 9).

27. Method according to one or more of Claims 1 to 25,
**characterized in that**
between an opening (130) and an opening (114), further agents are added in metered amounts through an opening (130a).

28. Method according to Claim 27,
**characterized in that**
a twin-screw densifier is used for the metered addition.

29. Method according to Claim 27 and/or Claim 28,
**characterized in that**
a modifying agent in powder and/or granular form, preferably in a concentration of 0.1 to 2 wt%, is added.

30. Method according to Claim 29,
**characterized in that**
an agent which stabilizes polyester that has melted or is undergoing incipient fusion is added as modifying agent.

31. Method according to Claim 29,
**characterized in that**
chain branching agents or viscosity boosters such as e.g. bisoxazolins, bislactams or tetracarboxylic acid dianhydrides are added.

32. Method according to one or more of Claims 26 to 31,
**characterized in that**
hydrolysis stabilizers, e.g. diimides, are added to prevent hydrolytic decomposition.

33. Method according to one or more of Claims 26 to 32,
**characterized in that**
fillers, e.g. glass fibres, natural fibres, calcium carbonate, are added to the mixture in concentrations of up to 30 wt%, preferably between 2 and 20 wt%.

34. Apparatus for transfer moulding plastic compositions having a thermoplastic polyester component and at least one modifier component, particularly in the form of recycled stock; in particular an apparatus for carrying out the method according to one or more of Claims 1 to 33, comprising a plastication unit (3) to plasticize and homogenize the plastic composition, and an injection unit (4) to inject the plasticized plastic composition into a mould (68, 75) of a moulding unit (5),
wherein the plastication unit (3) is preceded by a conditioning station (2) for a thermoplastic polyester component to dry and heat initial material of the thermoplastic polyester component and a metered-feed unit (132) is arranged at metered-addition opening (130) on the plastication unit (3) to add at least one modifier component to the thermoplastic polyester component into the plastication unit (3), and the plastication unit (3) is a screw extruder comprising an extruder cylinder (8) with a drive-side end (10) and an extruder screw (9); and wherein means for lowering the pressure are provided in the region of the metered-addition opening (130), in particular in the form of a reduction in the diameter of the root (11) of the screw.

35. Apparatus according to Claim 34,
**characterized in that**
the screw extruder (8, 9) has a nominal diameter D and a length L such that the ratio L/D is a normal length/diameter ratio for screw extruders, namely 35 - 55 and in particular 44-8.

36. Apparatus according to Claim 34 and/or Claim 35,
**characterized in that**
the conditioning station (2) has a first conditioning vessel (90), an inclined conveyor (95), a transfer device (98) with a vacuum lock (111, 112), and a second preparation vessel (102).

37. Apparatus according to Claim 36,
**characterized in that**
the first preparation vessel (90) is at ambient pressure and has an agitator (91) or a shredder knife.

38. Apparatus according to Claim 37,
**characterized in that**
the agitator (91) is rotatable about a vertical axis so that the initial material of the thermoplastic polyester component present in the vessel (90) can be heated.

39. Apparatus according to Claim 36 and/or Claim 37,
**characterized in that**
the vessel (90) has a discharge opening (94) or a discharge screw for solid materials through which the initial material of the thermoplastic polyester component can be fed to the inclined conveyor (95).

40. Apparatus according to one or more of Claims 36 to 39,
**characterized in that**
the inclined conveyor (95) is a screw conveyor (96) with a conveyor screw and a screw-conveyor cylinder; the screw-conveyor cylinder being insulated if required.

41. Apparatus according to one or more of Claims 36 to 40,
**characterized in that**
the second preparation vessel (102) is shaped like a barrel with a side wall (104), top wall (105) and bottom wall (106).

42. Apparatus according to one or more of Claims 36 to 41,
**characterized in that**
the second preparation vessel (102) is gas-tight, in particular gas-pressure-tight, with a substantially tubular filling chute for the thermoplastic polyester component connected to its top wall, a vacuum line (115) connected to the side wall (104), and an agitator (108) rotatable about a vertical axis (107) arranged in the region of the bottom wall (106).

43. Apparatus according to Claim 42,
**characterized in that**
gas-tight, in particular gas-pressure-tight, vacuum slide valves (111, 112) which form a feed lock for the material to be fed to the vessel (102) are arranged one after the other in the filling chute (101), each sealing off the cross-section of the filling chute.

44. Apparatus according to Claim 42 and/or Claim 43,
**characterized in that**
the vacuum line (115) is connected to a first high-vacuum pump (117a) and to a vacuum pump (117) so that the second preparation vessel (102) can be evacuated, in particular to a pressure of 1 to 20 mbar, and preferably 1 to 10 mbar.

45. Apparatus according to Claim 44,
**characterized in that**
the material fed to the vessel (102) can be stirred and/or swirled by the agitator (108) and thus heated so that under the combined effect of the vacuum prevailing in the vessel (102) the value of the moisture content of the material in the vessel (102) can be reduced to a value of 50 to 200 ppm of water, in particular 50 to 75 ppm of water.

46. Apparatus according to one or more of Claims 34 to 45,
**characterized in that**
the second preparation vessel (102) has a discharge opening (113) located in register with an opening (114) in the extruder cylinder (8) of the main extruder (8, 9), so that the material in the vessel (102) can be drawn into the main extruder (8, 9) by the extruder screw (9).

47. Apparatus according to Claim 46,
**characterized in that**
the second preparation vessel (102) has a gas-tight, particularly a gas-pressure-tight, connection to the interior of the extruder cylinder (8).

48. Apparatus according to one or more of Claims 34 to 47,
**characterized in that**
the metered-feed unit (132) is a metering extruder by means of which the modifier component can be melted and the melt can be fed in metered amounts to the main extruder (8, 9), through a pipe if required, at a distance L1 = 17 - 20 D, in particular 19D, from the feed end (10).

49. Apparatus according to one or more of Claims 34 to 48,
**characterized in that**
on the plastication unit (3) an opening (121) in the extruder cylinder (8) to which a high-vacuum line (118) communicating with a second high-vacuum pump (119), e.g. a Roots pump, is connected is located at a distance L2 > L1 from the feed end (10) so that interior of the extruder cylinder (8) can be subjected to a pressure of 0.5 - 5 mbar, in particular less than 1 mbar.

50. Apparatus according to one or more of Claims 34 to 49,
**characterized in that**
the plastication unit (3), injection unit (4) and moulding unit (5) are arranged in a line one after the other along a common longitudinal axis (13).

51. Apparatus according to one or more of Claims 34 to 49,
**characterized in that**
the plastication unit and the injection unit are arranged parallel and in juxtaposition, in particular one above the other, the injection unit (4) having an injection cylinder (32a) in which an injection piston (40a) is displaceably mounted, the piston (40a) being actively connected to a piston/cylinder unit (40b), in particular a hydraulic piston/cylinder unit.

52. Apparatus according to one or more of Claims 34 to 51,
**characterized in that**
the extruder screw (9) has, in succession in the conveying direction: a drive coupling region (903), a feed zone (904), a compression zone (905), a first metering zone (906), a jam bushing (907), an infeed zone (908), a compaction zone (909), a pressure zone (910), a mixer zone (911), a vacuum zone (912), a compression zone (913), and a second metering zone (914).

53. Apparatus according to Claim 52,
**characterized in that**
the feed zone (904), the compression zone (905) and the first metering zone (906) form a first main section (A) of the extruder screw (9) for the thermoplastic polyester component or polyester mixture in which the polyester initial material is drawn in, compacted and melted, and the delivery mass flow of the melt is definable.

54. Apparatus according to Claim 53,
**characterized in that**
the main section (A) has a length of a 15 - 20 D, in particular about 17D.

55. Apparatus according to one or more of Claims 52 to 54,
**characterized in that**
in the feed zone (904) the extruder screw (9) has a flight depth of 9 - 18 mm, in particular 11 mm, and the first metering zone (906) has a flight depth of about 4 mm and a pitch of 0.6 to 1 D, in particular 0.8D, the first metering zone (906) being designed so that the throughput of molten mass per revolution of the screw is constant.

56. Apparatus according to one on more of Claims 52 to 55,
**characterized in that**
the first metering zone (906) is followed by a jam bushing (907) or screwed restrictor to increase the surface of the molten mass.

57. Apparatus according to one or more of Claims 52 to 56,
**characterized in that**
the extruder screw (9) is of multi-start design in the region of the infeed zone (908), compaction zone (909) and pressure zone (910), the infeed zone (908) having a length of 3 to 6 D, in particular about 3D, so that the mass flow is divided into a number of separate mass flows, the flight depth in the infeed zone (908) being about 11 to 15 mm, in particular 12 mm.

58. Apparatus according to one or more of Claims 52 to 57,
**characterized in that**
in the compaction zone (909) the flight depth is reduced to about 6 - 8 mm, in particular 7.5 mm.

59. Apparatus according to one or more of Claims 52 to 58,
**characterized in that**
a mixer device configured for example as a hedgehog mixer is arranged in the mixer zone (911).

60. Apparatus according to one or more of Claims 52 to 59,
**characterized in that**
the infeed zone (908), the compaction zone (909), the pressure zone (910) and the mixer zone (911) form a second main section (B) of the extruder screw (9) in which a second component of the plastic compound can be added in metered amounts to the polyester component or polyester mixture and the total plastic compound can be mixed and homogenized.

61. Apparatus according to one or more of Claims 52 to 60,
**characterized in that**
the vacuum zone (912), the compression zone (913) and the second metering zone (914) form a third main section (C) of the extruder screw (9) which is configured as a screw conveyor and has a volume conveyed per revolution of the screw which is greater than that of the preceding extruder screw sections (A and B); and the main section (C) has a length of about 15 - 20 D, preferably about 16 - 17 D.

62. Apparatus according to Claim 61,
**characterized in that**
in the region of the vacuum zone (912) the flight depth is increased to about 16 - 20 mm, in particular 18 man.

63. Apparatus according to one on more of Claims 52 to 62,
**characterized in that**
in the region of the compression zone (913) the flight depth is reduced in the conveying direction to about 7 - 8 mm, preferably 7.5 mm, with a pitch of 80 mm.

64. Apparatus according to one or more of Claims 34 to 63,
**characterized in that**
between the opening (130) and the opening (114) a further metered-feed opening (130a) is provided.

65. Apparatus according to Claim 64,
**characterized in that**
a metering apparatus, e.g. a twin-screw densifier, is connected to the metered-feed opening (130a).

## Revendications

1. Procédé de moulage par injection de mélanges de matières plastiques comprenant au moins un composant polyester thermoplastique et au moins un composant modifiant, en particulier leur recyclat, dans lequel
- le composant polyester thermoplastique, respectivement le mélange de polyester à l'état initial, est chauffé et séché dans un poste de traitement préalable (2),
- le composant polyester chauffé et séché est chargé dans une unité de plastification (3), et est plastifié sous pression ainsi que par une action de frottement et de cisaillement,
- au moins un composant modifiant est traité à l'extérieur du poste de traitement préalable (2), et
- est ajouté au composant polyester plastifié, présent dans l'unité de plastification (3) en diminuant la pression dans le composant polyester plastifié,
- le mélange de composant polyester thermoplastique et de modifiant est homogénéisé dans l'unité de plastification (3) avec augmentation de la pression, et est déchargé sous la forme d'une masse fondue dans une unité d'injection (4),
- la masse fondue est injectée à l'aide de l'unité d'injection (4) dans une unité de moulage (5) présentant un moule ouvert (68, 75), et
- est ensuite pressé en une pièce moulée, par fermeture du moule ouvert (68, 75).

2. Procédé selon la revendication 1, **caractérisé en ce que** le composant modifiant est ajouté en tant que masse fondue au composant polyester thermoplastique.

3. Procédé selon la revendication 1 et/ou 2, **caractérisé en ce que** le composant modifiant est ajouté à la masse fondue du composant polyester thermoplastique.

4. Procédé selon l'une ou plusieurs des revendications 1 à 3, **caractérisé en ce que** le mélange du composant polyester thermoplastique et d'au moins un composant modifiant est soumis, dans l'unité de plastification (3), à un vide poussé pour dégazage et séchage du mélange.

5. Procédé selon l'une ou plusieurs des revendications 1 à 4, **caractérisé en ce que** le modifiant est ajouté au composant polyester thermoplastique dans une zone de diminution de la pression de la masse fondue.

6. Procédé selon l'une ou plusieurs des revendications 1 à 5, **caractérisé en ce que** le mélange du polyester et du modifiant est soumis à un vide poussé dans une zone de diminution de la pression de la masse fondue.

7. Procédé selon l'une ou plusieurs des revendications 1 à 6, **caractérisé en ce que** l'on utilise comme composant polyester thermoplastique, en particulier des poly(téréphtalate d'alkylène), par exemple le poly(téréphtalate d'éthylène) ou le poly(téréphtalate de butylène), ou des poly(naphtalate d'alkylène), par exemple le poly(naphtalate d'éthylène), ou des mélanges de ceux-ci.

8. Procédé selon l'une ou plusieurs des revendications 1 à 7, **caractérisé en ce que** l'on utilise comme modifiant, un mélange d'une polyoléfine et d'agents de compatibilisation et/ou d'agents de résistance élevée aux chocs, par exemple le Lotryl®, le Paraloid®, etc.

9. Procédé selon la revendication 8, **caractérisé en ce que** le modifiant est plastifié ou fondu à l'aide d'un extrudeur-doseur (132), et ajouté à la masse fondue du composant polyester thermoplastique, respectivement du mélange de polyesters, présente dans l'unité de plastification (3), par un dispositif de raccordement (131).

10. Procédé selon la revendication 8 et/ou 9, **caractérisé en ce que** le modifiant est ajouté au composant polyester thermoplastique à une température allant de 250 à 280°C.

11. Procédé selon l'une ou plusieurs des revendications 8 à 10, **caractérisé en ce que** le composant polyoléfine et le composant de compatibilisation du mélange modifiant sont mélangés à la pression ambiante, et à la température ambiante ou à la température de plastification, et sont fondus sous la forme d'un mélange dans l'extrudeur-doseur (132).

12. Procédé selon l'une ou plusieurs des revendications 8 à 11, **caractérisé en ce que** l'on utilise une polyoléfine avec un indice de fusion (MFI) allant de 0,5 à 35 g/10 minutes (190°C, 2,16 kg), respectivement de 0,1 à 20 g/10 minutes (190°C, 5 kg).

13. Procédé selon l'une ou plusieurs des revendications 8 à 12, **caractérisé en ce que** l'on utilise comme matériau de départ, une polyoléfine qui est pulvérulente ou se présente sous la forme d'un granulé ou d'un produit broyé jusqu'à une taille des grains de 1 cm.

14. Procédé selon l'une ou plusieurs des revendications 8 à 13, **caractérisé en ce que** l'on utilise une polyoléfine, en particulier une HDPE, dont le point de fusion se situe à environ 130°C.

15. Procédé selon l'une ou plusieurs des revendications 8 à 14, **caractérisé en ce que** l'on utilise un poly(téréphtalate d'éthylène), dont la viscosité intrinsèque (VI) se situe dans l'intervalle allant de 0,5 à 1,0 dl/g, en particulier de 0,6 à 0,75 dl/g.

16. Procédé selon l'une ou plusieurs des revendications 8 à 15, **caractérisé en ce que** l'on utilise comme matériau de départ du poly(téréphtalate d'éthylène), des flocons ayant une taille allant de 0,1 à 10 cm et/ou des copeaux de feuille ayant une taille allant de jusqu'à 0,5 cm et/ou des produits semi-finis (préformés) broyés de poly(téréphtalate d'éthylène) ayant une taille de grains allant de 0,2 à 5 cm, en particulier de 0,2 à 0,5 cm et/ou des fibres de PET.

17. Procédé selon l'une ou plusieurs des revendications 8 à 16, **caractérisé en ce que** l'on utilise un matériau de départ en poly(téréphtalate d'éthylène), qui présente une proportion d'humidité de jusqu'à 3%.

18. Procédé selon l'une ou plusieurs des revendications 1 à 17, **caractérisé en ce que** le composant polyester thermoplastique est ajouté sous la forme d'un produit en vrac ou par une bande transporteuse, dans un premier récipient de transformation (90) du poste de traitement préalable (2).

19. Procédé selon l'une ou plusieurs des revendications 1 à 18, **caractérisé en ce que** le récipient de transformation (90) se trouve à la pression ambiante et que, à l'intérieur du premier récipient de transformation (90), le matériau de départ du composant polyester thermoplastique est chauffé et préséché à l'aide d'un mélangeur (91), jusqu'à une température allant de 150 à 200°C, en particulier est préséché jusqu'à une teneur en humidité de 500 ppm d'eau, de préférence de 150 à 300 ppm d'eau.

20. Procédé selon l'une ou plusieurs des revendications 1 à 19, **caractérisé en ce que** le composant polyester thermoplastique est amené par un dispositif transporteur incliné (95), vers un dispositif de transfert (98) disposé avant un deuxième récipient de traitement préalable (102) du poste de traitement préalable (2), et est ensuite amené par une vanne d'arrêt (111, 112) étanche au gaz, présentant un sas d'amenée, dans le deuxième récipient de traitement préalable (102).

21. Procédé selon l'une ou plusieurs des revendications 1 à 20, **caractérisé en ce que** le deuxième récipient de traitement préalable (102) est évacué à l'aide d'une pompe à vide (117) jusqu'à une pression interne de 1 à 20 mbar, de préférence de 1 à 10 mbar, et le composant polyester thermoplastique introduit est agité ou mélangé à l'aide d'une barre de mélangeur (108), de sorte que l'on atteigne une température du composant polyester thermoplastique allant de 150 à 200°C, en particulier de 190°C, dans le deuxième récipient de traitement (102).

22. Procédé selon l'une ou plusieurs des revendications 1 à 21, **caractérisé en ce que** le composant polyester thermoplastique est séché dans le deuxième récipient de transformation (102), jusqu'à une proportion d'humidité allant de 50 à 200 ppm d'eau, en particulier jusqu'à une valeur allant de 55 à 75 ppm.

23. Procédé selon l'une ou plusieurs des revendications 1 à 22, **caractérisé en ce que** le composant polyester thermoplastique, à une température allant de 150 à 200°C, en particulier de 190°C, et une teneur en humidité allant de 50 à 200 ppm, en particulier de 55 à 75 ppm, est introduit dans un extrudeur principal (8, 9) présentant un cylindre d'extrusion (8) et une vis d'extrusion (9), de l'unité de plastification (3).

24. Procédé selon l'une ou plusieurs des revendications 1 à 23, **caractérisé en ce que** la vis d'extrusion (9) est mise en rotation, et le composant polyester thermoplastique se trouvant dans le cylindre d'extrusion (8) est ainsi soumis aux forces de frottement et de cisaillement, de sorte que le composant polyester thermoplastique est chauffé, en particulier jusqu'à une température supérieure au point de fusion, par exemple 250 à 290°C, de sorte que le composant polyester thermoplastique est présent dans le cyclindre d'extrusion (8) sous la forme d'une masse fondue.

25. Procédé selon l'une ou plusieurs des revendications 1 à 24, **caractérisé en ce que** le dispositif transporteur incliné (95) est chauffé.

26. Procédé selon l'une ou plusieurs des revendications 1 à 25, **caractérisé en ce que** la pression dans le composant polyester thermoplastique est augmentée le long de l'extrudeur principal (8, 9), depuis une pression d'entrée p₀ en un site de charge (113, 114) du composant polyester thermoplastique dans l'extrudeur principal (8, 9), de manière stable, jusqu'à une pression p₁ > p₀, est ensuite diminuée de la pression p₁ à une pression p₃ ≤ p₀ dans la zone de l'ouverture de dosage (130), après quoi la pression est augmentée en partant de la pression p₃, de manière stable, jusqu'à une pression p₂ (p₁ > p₂ > p₀), ensuite la pression dans la masse fondue est diminuée jusqu'à l'ouverture (121), en partant de la pression p₂ jusqu'à une pression p₃, après quoi elle est augmentée à une pression p₄ > p₁ jusqu'à l'extrémité de transport de l'extrudeur principal (8, 9).

27. Procédé selon l'une ou plusieurs des revendications 1 à 25, **caractérisé en ce que** d'autres agents sont ajoutés par une ouverture (130a), entre une ouverture (130) et une ouverture (114).

28. Procédé selon la revendication 27 **caractérisé en ce que**, pour l'addition, on utilise un outil à double vis.

29. Procédé selon la revendication 27 et/ou 28, **caractérisé en ce que** l'on ajoute un modifiant pulvérulent et/ou de type granulé, de préférence en une concentration allant de 0,1 à 2% en poids.

30. Procédé selon la revendication 29 **caractérisé en ce que**, comme modifiant, on ajoute un agent qui stabilise le polyester fondu.

31. Procédé selon la revendication 29, **caractérisé en ce que** l'on ajoute un agent de réticulation ou d'augmentation de la viscosité, comme par exemple une bisoxazoline, un bislactame ou un dianhydride de tétraacide carboxylique.

32. Procédé selon l'une ou plusieurs des revendications 26 à 31, **caractérisé en ce que** l'on ajoute des stabilisants d'hydrolyse, par exemple un diimide, pour éviter une décomposition hydrolytique.

33. Procédé selon l'une ou plusieurs des revendications 26 à 32, **caractérisé en ce que** l'on mélange comme charge, par exemple des fibres de verre, des fibres naturelles, du carbonate de calcium à des concentrations de jusqu'à 30% en poids, de préférence de 2 à 20% en poids.

34. Dispositif pour le moulage par injection de mélanges de matières synthétiques présentant un composant polyester thermoplastique et au moins un composant modifiant, en particulier leur recyclat, en particulier un dispositif pour réaliser le procédé selon une ou plusieurs des revendications 1 à 33, présentant une unité de plastification (3) pour plastifier et homogénéiser le mélange de matières synthétiques, une unité d'injection (4) pour injecter le mélange de matières synthétiques plastifié dans un moule (68, 75) d'une unité de moulage (5), dans lequel l'unité de plastification (3) est précédée d'un poste de traitement préalable (2) pour un composant polyester thermoplastique, pour sécher et chauffer le matériau de départ du composant polyester thermoplastique, et sur l'unité de plastification (3), est disposée une unité de dosage (132) sur une ouverture de dosage (130), pour l'addition d'au moins un composant modifiant au composant polyester thermoplastique dans l'unité de plastification (3), et l'unité de plastification (3) est un extrudeur à vis présentant un cylindre d'extrusion (8) avec une extrémité motrice (10) et une vis d'extrusion (9), et dans la zone de l'ouverture de dosage (130), sont prévus des moyens pour diminuer la pression, en particulier sous forme d'une réduction du diamètre du centre de la vis (19).

35. Dispositif selon la revendication 34, **caractérisé en ce que** l'extrudeur à vis (8, 9) présente un diamètre nominal D et une longueur L, le rapport L/D étant un rapport longueur/diamètre usuel d'un extrudeur à vis de L/D = 35 - 55, en particulier L/D = 44,8.

36. Dispositif selon la revendication 34 et/ou 35, **caractérisé en ce que** le poste de traitement préalable (2) présente un premier récipient de traitement préalable (90), un dispositif de transport ascendant (95), un dispositif de transfert (98) avec une vanne de vide (111, 112) et un deuxième récipient de traitement (102).

37. Dispositif selon la revendication 36, **caractérisé en ce que** le premier récipient de traitement (90) se trouve à la pression ambiante et présente un mélangeur (91) ou un schredder.

38. Dispositif selon la revendication 37, **caractérisé en ce que** le mélangeur (91) peut être mis en rotation autour d'un axe vertical, de sorte que le matériau de départ du composant polyester thermoplastique se trouvant dans le récipient (90), peut être chauffé.

39. Dispositif selon une ou plusieurs des revendications 36 à 37, **caractérisé en ce que** le récipient (90) présente une ouverture de décharge (94) ou une vis de décharge pour corps solide, par laquelle le matériau de départ du composant polyester thermoplastique peut être amené au dispositif de transport ascendant (95).

40. Dispositif selon une ou plusieurs des revendications 36 à 39, **caractérisé en ce que** le dispositif de transport ascendant (95) est un transporteur à vis (96) avec une vis de transport et un cylindre de vis de transport, dans lequel le cylindre de vis de transport est le cas échéant isolé.

41. Dispositif selon une ou plusieurs des revendications 36 à 40, **caractérisé en ce que** le deuxième récipient de transformation (102) a la forme d'un tonneau avec une paroi de récipient (104), une paroi de couvercle (105) et une paroi de fond (106).

42. Dispositif selon une ou plusieurs des revendications 36 à 41, **caractérisé en ce que** le deuxième récipient de transformation (102) est étanche au gaz, en particulier étanche à un gaz sous pression, un entonnoir de remplissage essentiellement tubulaire, pour le composant polyester thermoplastique, étant relié à sa paroi de couvercle, une conduite de vide (115) étant reliée à la paroi du récipient (104), et un mélangeur (108) pouvant tourner autour d'un axe vertical (107) étant disposé dans la zone de la paroi de fond (106).

43. Dispositif selon la revendication 42, **caractérisé en ce que** des vannes de vide (111, 112), chaque fois étanches au gaz, en particulier étanches à un gaz sous pression, qui forment une vanne d'alimentation pour le matériau venant du récipient (102), sont disposées dans l'entonnoir de remplissage (101)

44. Dispositif selon la revendication 42 et/ou 43, **caractérisé en ce que** la conduite de vide (115) est en liaison avec une première pompe à vide poussé (117a) et une pompe à vide (117), de sorte que le deuxième récipient de transformation (102) peut être évacué, en particulier à une pression de 1 à 20, de préférence 1 à 10 mbar.

45. Dispositif selon la revendication 44, **caractérisé en ce que** le matériau amené dans le récipient (102) peut être agité ou mélangé avec le mélangeur (108) et peut ainsi être chauffé de sorte que, en coopération avec le vide régnant dans le récipient (102), la valeur du taux d'humidité du matériau se trouvant dans le récipient (102) peut être réduite jusqu'à une valeur allant de 50 à 200 ppm d'eau, en particulier de 50 à 75 ppm.

46. Dispositif selon une ou plusieurs des revendications 34 à 45, **caractérisé en ce que** le deuxième récipient de transformation (102) présente une ouverture de décharge (113), qui est disposée en coïncidence avec une ouverture (114) dans le cylindre d'extrusion (8) de l'extrudeur principal (8, 9), de sorte que le matériau se trouvant dans le récipient (102) peut être extrait de la vis d'extrusion (9) dans l'extrudeur principal (8, 9).

47. Dispositif selon la revendication 46, **caractérisé en ce que** le deuxième récipient de transformation (102) est relié de manière étanche au gaz, en particulier étanche à un gaz sous pression, à l'intérieur du cylindre d'extrusion (8).

48. Dispositif selon une ou plusieurs des revendications 34 à 47, **caractérisé en ce que** l'unité de dosage (132) est un extrudeur de dosage, avec lequel le composant modifiant peut être fondu et la masse fondue peut être ajoutée le cas échéant, par une conduite tubulaire, dans l'extrudeur principal (8, 9), à une distance L₁ = 17 - 20D, en particulier L₁ = 19D depuis l'extrémité d'alimentation (10).

49. Dispositif selon une ou plusieurs des revendications 34 à 48 **caractérisé en ce que**, sur l'unité de plastification (3), à une distance l₂ > l₁ de l'extrémité d'alimentation (10) dans le cylindre d'extrusion (8), est disposée une ouverture (121), à laquelle est raccordée une conduite à vide poussé (118), laquelle est en liaison avec une deuxième pompe à vide poussé (119), par exemple une pompe Roots, de sorte que l'intérieur du cylindre d'extrusion (8) se trouve à une pression allant de 0,5 à 5 mbar, en particulier inférieure à 1 mbar.

50. Dispositif selon une ou plusieurs des revendications 34 à 49, **caractérisé en ce que** l'unité de plastification (3), l'unité d'injection (4) et l'unité de moulage (5) sont disposées le long d'un axe longitudinal commun (13), de manière linéaire l'une avec l'autre.

51. Dispositif selon une ou plusieurs des revendications 34 à 49, **caractérisé en ce que** l'unité de plastification et l'unité d'injection sont disposées de manière parallèle l'une à l'autre, en particulier superposées, l'unité d'injection (4) présentant un cylindre d'injection (32a), dans lequel un piston d'injection (40a) est disposé de manière mobile, le piston (40a) étant en liaison active avec une unité de cylindre de piston (40b), en particulier hydraulique.

52. Dispositif selon une ou plusieurs des revendications 34 à 51, **caractérisé en ce que** la vis d'extrusion (9) présente dans la direction du transport, successivement une zone de couplage (903), une zone d'entrée (904), une zone de compression (905), une première zone d'addition (906), une douille (907), une zone d'addition (908), une zone de compaction (909), une zone de pression (910), une zone de mélange (911), une zone de vide (912), une zone de compression (913) et une deuxième zone d'addition (914).

53. Dispositif selon la revendication 52, **caractérisé en ce que** la zone d'entrée (904), la zone de compression (905) et la première zone d'addition (906) forment une première section principale (A) de la vis d'extrusion (9) pour le composant polyester thermoplastique, respectivement le mélange de polyesters, de sorte que le matériau polyester de départ introduit, compacté et fondu, peut être défini comme le courant d'alimentation de la masse fondue.

54. Dispositif selon la revendication 53, **caractérisé en ce que** la section principale (A) présente une longueur de 15 - 20D, en particulier d'environ 17D.

55. Dispositif selon une ou plusieurs des revendications 52 à 54, **caractérisé en ce que** la vis d'extrusion (9) présente dans la zone d'entrée (904), une profondeur de 9 - 18, en particulier de 11 mm, et la première zone d'addition (906), une profondeur de filet d'environ 4 mm et une pente allant de 0,6 à 1D, en particulier de 0,8D, la première zone d'addition (906) étant disposée de telle sorte que la masse fondue qui passe est constante par tour de la vis.

56. Dispositif selon une ou plusieurs des revendications 52 à 55, **caractérisé en ce que** la première zone d'addition (906) est disposée après une douille (907) ou un étranglement fileté pour augmenter la surface de la masse fondue.

57. Dispositif selon une ou plusieurs des revendications 52 à 56, **caractérisé en ce que** la vis d'extrusion (9) est formée dans le domaine de la zone d'addition (908), de la zone de compression (909) et de la zone de pression (910), en plusieurs voies, la zone d'addition (908) présentant une longueur de 3 à 6D, en particulier d'environ 3D, de sorte que le courant massique soit divisé en plusieurs courants massiques séparés, la profondeur de filet dans la zone d'addition (908) se situant dans l'intervalle allant de 11 à 15 mm, en particulier de 12 mm.

58. Dispositif selon une ou plusieurs des revendications 52 à 57 **caractérisé en ce que**, dans la zone de compaction (909), la profondeur de filet est réduite à environ 6 - 8 mm, en particulier à 7,5 mm.

59. Dispositif selon une ou plusieurs des revendications 52 à 58 **caractérisé en ce qu'**un dispositif mélangeur, qui est formé par exemple comme un mélangeur en hérisson, est disposé dans la zone de mélange (911).

60. Dispositif selon une ou plusieurs des revendications 52 à 59, **caractérisé en ce que** la zone d'addition (908), la zone de compaction (909), la zone de pression (910) et la zone de mélange (911) forment une deuxième section principale (B) de la vis d'extrusion (9), de sorte qu'un deuxième composant de la masse de matière synthétique du composant polyester, respectivement du mélange de polyesters, peut être ajouté et la masse de matière synthétique totale peut être mélangée et homogénéisée.

61. Dispositif selon une ou plusieurs des revendications 52 à 60, **caractérisé en ce que** la zone de vide (912), la zone de compression (913) et la deuxième zone d'addition (914) forment une troisième section principale (C) de la vis d'extrusion (9), qui est réalisée comme une vis de transport et présente un volume de transport par rotation de la vis, qui est supérieur à celui des sections de la vis d'extrusion précédentes (A et B) et la section principale (C) présente une longueur d'environ 15 - 20D, en particulier d'environ 16 - 17D.

62. Dispositif selon la revendication 61, **caractérisé en ce que** dans le domaine de la zone de vide (912), la profondeur de filet est augmentée, à environ 16 - 20 mm, en particulier à 18 mm.

63. Dispositif selon une ou plusieurs des revendications 52 à 62, **caractérisé en ce que** dans le domaine de la zone de compression (913), la profondeur de filet est réduite dans la direction du transport, à environ 7 - 8 mm, de préférence à 7,5 mm pour une pente de 80 mm.

64. Dispositif selon une ou plusieurs des revendications 34 à 63, **caractérisé en ce qu'**entre l'ouverture (130) et l'ouverture (114), est prévue une autre ouverture de dosage (130a).

65. Dispositif selon la revendication 64, **caractérisé en ce que** sur l'ouverture de dosage (130a), on dispose un appareil de dosage, par exemple un outil à vis double.
